(19) Europäisches Patentamt
European Patent Office
Office européen des brevets

(11) **EP 3 804 942 A1**

(12) **EUROPEAN PATENT APPLICATION**
published in accordance with Art. 153(4) EPC

(43) Date of publication:
**14.04.2021 Bulletin 2021/15**

(51) Int Cl.:
***B29C 45/14*** *(2006.01)*      ***B29C 65/70*** *(2006.01)*
***B32B 5/28*** *(2006.01)*

(21) Application number: **19814168.1**

(22) Date of filing: **28.05.2019**

(86) International application number:
**PCT/JP2019/021102**

(87) International publication number:
**WO 2019/235299 (12.12.2019 Gazette 2019/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.06.2018 JP 2018109587**

(71) Applicant: **Toray Industries, Inc.
Tokyo, 103-8666 (JP)**

(72) Inventors:
• **TAKAHASHI Yuki
Nagoya-shi, Aichi 455-8502 (JP)**
• **SASAKI Hideaki
Nagoya-shi, Aichi 455-8502 (JP)**
• **HIRATA Shin
Nagoya-shi, Aichi 455-8502 (JP)**

(74) Representative: **Hoefer & Partner Patentanwälte
mbB
Pilgersheimer Straße 20
81543 München (DE)**

(54) **INTEGRATED MOLDED BODY AND METHOD FOR MANUFACTURING SAME**

(57)    The present invention provides: an integrated molded body (1) in which a joining resin member (C) (4) comprising discontinuous carbon fibers and a thermoplastic resin is interposed between a plate material (A) (2) one side surface of which is a design surface, and a resin member (B) (3), the integrated molded body (1) having a first joining part (5) at which the resin member (B) (3) is joined to the joining resin member (C) (4) and a second joining part (6) at which at least a partial region of an outer peripheral edge part of the plate material (A) (2) is joined to the joining resin member (C) (4): and a method for manufacturing the same. According to the present invention, it is possible to join a plurality of structures to each other at high joining strength with the joint boundary part having excellent smoothness, reduce warpage even if a molded body has a constituent member of a plate material, and realize a reduction in weight/thickness.

**FIG. 3**

EP 3 804 942 A1

**Description**

Technical Field of the Invention

The present invention relates to an integrated molded body that is suitable for use in parts or casings of equipment such as personal computers, office automation (OA) equipment, and mobile phones, that requires to be lightweight, to have high strength and high rigidity, and to be thin, and a method for manufacturing the same.

Background Art of the Invention

At the present time, as electric/electronic devices such as personal computers, OA equipment, audio visual (AV) equipment, mobile phones, telephones, facsimiles, home appliances and toys are becoming more portable, smaller size and lighter weight are required. In order to achieve this requirements, because it is necessary to prevent the components that form the devices, especially casings, from significantly flexing when an external load is applied, thereby causing contact with internal components and causing destruction, it is required to achieve reduction in thickness while achieving high strength and high rigidity.

Further, in a molded structure which is made compact and lightweight by integrally joining and molding a fiber reinforced resin structure comprising reinforcing fibers and a resin, and another member such as a frame member, further reduction in thickness without warpage and reliability in joining strength are required.

In Patent document 1, a resin joint body, which comprises a first resin molded article and a second resin molded article and in which they are joined by injecting a molten resin into a joining part formed between the first resin molded article and the second resin molded article, is described, and an effect is disclosed in that by employing a structure wherein the joining part is centered about on the downstream opening of the injection flow channel, and the joining part has a portion having an angle with the molten resin injection direction in the injection flow channel and extending outward from the center of the downstream opening, the joining strength can be effectively secured with a small amount of the injection resin regardless of the joining place.

Further, in Patent document 2, a synthetic resin hollow molded article, which is obtained by forming a primary hollow molded article by integrating a plurality of divided pieces, formed by injection molding a synthetic resin, through a joining part, and fusing the joining part with a secondary molded portion formed by further injection molding a synthetic resin after placing the primary hollow molded article in a mold, is described, and an effect is disclosed in that by forming the joining part by force fitting, there is no resin leakage in the joining part toward the hollow portion side and the fracture strength of the joining part is excellent.

Further, in Patent document 3, a configuration of forming a passage in a joining part of a plurality of resin components and joining the plurality of resin components with a joining resin by charging the joining resin into the passage is described, and an effect is disclosed in that by further providing a protrusion on at least one resin component, the joining resin can be prevented from coming out of the passage, and in addition, a resin product hard to cause cracks, splits and joining defectives can be formed without deteriorating the appearance of the resin product.

Further, in Patent document 4, an integrated molded body, which is obtained by preparing a fiber reinforced thermoplastic resin material having a thermoplastic resin adhesive layer made of a nonwoven fabric of thermoplastic resin or the like at an adhesive interface between a radio wave shielding material (a) and a radio wave transmitting material (b), and fixedly bonding the radio wave shielding material (a) and the radio wave transmitting material (b) to each other via the thermoplastic resin adhesive layer by outsert injection molding, is described, and an effect is disclosed in that an electronic device housing having excellent peeling strength at the joining part and excellent mass productivity can be obtained without deteriorating the performance of radio communication while maintaining the radio wave blocking property.

Furthermore, in Patent document 5, an integrated molded body, which is obtained by forming at least a part of plate ends of a sandwich structure composed of a core layer made of discontinuous fibers and a thermoplastic resin (A) and a skin layer made of continuous fibers and a resin (B) as a joining part, placing another structure (C) in the joining part, and providing a joining layer at least at a part between the skin layer and the other structure (C), is described, and an effect is disclosed in that it is possible to form an integrated molded body with a thin wall, and to obtain an integrated molded body which is lightweight, has high strength and high rigidity, and has high joining strength with another structure.

Prior art documents

Patent documents

Patent document 1: JP-A-2003-236877
Patent document 2: JP-A-HEI 11-179758
Patent document 3: JP-A-2000-272014
Patent document 4: JP-A-2008-34823
Patent document 5: JP-A-2016-49649

Summary of the Invention

Problems to be solved by the Invention

In the configuration of Patent document 1, it is aimed to join two resin molded articles with a simple device with a small amount of injected resin, and there is a room for improvement in application of this configuration to formation of a molded body joined with a plurality of members which aims to realize reduction in thickness/weight and to suppress warpage, and further, no suggestion is made regarding the constitution for the improvement.

Further, in the configuration of Patent document 2, it is aimed mainly to prevent resin leakage through a gap between pieces, which may be created by increasing the molding pressure at the time of secondary injection molding, thereby causing a deformation of a fitting portion of the joining part, toward the hollow part side of the molded article, by configuring the joining part of the pieces so as not to come off from each other by force fitting, and there is a room for improvement in application of this configuration to formation of a molded body joined with a plurality of members which also aims to realize reduction in thickness/weight and to suppress warpage, and further, no suggestion is made regarding the constitution for the improvement.

Further, in the configuration of Patent document 3, it is aimed mainly to prevent causing of cracks, splits and joining defectives and further to prevent joining resin from coming out, and there is a room for improvement in application of this configuration to formation of a molded body joined with a plurality of members which also aims to realize reduction in thickness/weight and to suppress warpage, and further, no suggestion is made regarding the constitution for the improvement.

Further, in the configuration of Patent document 4, since the radio wave transmitting material is molded by a method of injecting the material for forming it into a mold placed with the radio wave shielding material, the amount of injected resin increases, and in case where the integrated molded body is a plate material having a plane shape, there is a room for improvement in reducing warpage due to heat shrinkage of the resin.

Furthermore, in the configuration of Patent document 5, it is a configuration using an adhesive such as an acrylic adhesive for the joining layer, and although it is possible to form a thin wall or the like, there is a room for improvement with respect to securing a joining strength and reduction in warpage of a constituent member in case of a molded body with a plate material.

Accordingly, in view of the above-described problems of the prior art, an object of the present invention is to provide an integrated molded body in which a plurality of structures are joined with a high joining strength, the joint boundary part has a good smoothness, reduction in warpage is possible even if the molded body has a constituent member of a plate material, and which enables reduction in weight/thickness, and a method for manufacturing the same.

Means for solving the Problems

To achieve the above-described object, the present invention employs the following means.

(1) An integrated molded body in which a resin member (C) comprising discontinuous carbon fibers and a thermoplastic resin is interposed between a plate material (A) one side surface of which is a design surface, and a resin member (B), characterized in that the integrated molded body has a first joining part at which the resin member (B) is joined to the resin member (C) and a second joining part at which at least a partial region of an outer peripheral edge part of the plate material (A) is joined to the resin member (C).

(2) The integrated molded body according to (1), wherein the discontinuous carbon fibers contained in the resin member (C) have a weight average fiber length of 0.3 to 3 mm.

(3) The integrated molded body according to (1) or (2), wherein the resin member (C) is a resin member molded by injection molding, and among linear expansion coefficients of the resin member (C), a linear expansion coefficient in a resin flow direction during injection molding is $1.0 \times 10^{-7}$ to $4.0 \times 10^{-5}$/K, and a linear expansion coefficient in a direction perpendicular to the resin flow direction is $1.0 \times 10^{-7}$ to $2.0 \times 10^{-5}$/K.

(4) The integrated molded body according to any one of, wherein a main component of the thermoplastic resin contained in the resin member (C) is a polycarbonate resin.

(5) The integrated molded body according to (4), wherein the resin member (C) contains at least one resin selected from a polybutylene terephthalate (PBT) resin, an acrylonitrile-butadiene-styrene (ABS) resin and a polyethylene terephthalate (PET) resin together with the polycarbonate resin.

(6) The integrated molded body according to any one of (1) to (5), wherein the resin member (C) has a density of 1.0 to 1.4 g/cm$^3$.

(7) The integrated molded body according to any one of (1) to (6), wherein the resin member (C) has a fiber weight content of 5 to 30% by weight.

(8) The integrated molded body according to any one of (1) to (7), wherein a volume of the resin member (C) is 2 to 30 times a volume of the resin member (B).

(9) The integrated molded body according to any one of (1) to (8), wherein the second joining part is formed over the entire circumference of the outer peripheral edge part of the plate material (A).

(10) The integrated molded body according to any one of (1) to (9), wherein the plate material (A) and the resin member (B) are distanced from each other.

(11) The integrated molded body according to any one of (1) to (10), wherein at least a part of a surface on the design surface side of the integrated molded body has a region where the plate material (A), the resin member (B) and the resin member (C) are exposed.

(12) The integrated molded body according to any one of (1) to (11), wherein at least a part of the resin member (C) has a standing wall shape portion.

(13) The integrated molded body according to any one of (1) to (12), wherein the plate material (A) and the resin member (C) are joined via a thermoplastic resin layer (D).

(14) The integrated molded body according to any one of (1) to (13), wherein the resin member (B) comprises discontinuous glass fibers having a weight average fiber length of 0.1 to 0.7 mm and a thermoplastic resin.

(15) The integrated molded body according to any one of (1) to (14), wherein the resin member (B) is a radio wave transmitting member.

(16) The integrated molded body according to any one of (1) to (15), wherein the plate material (A) has a structure including any one of a metal member and a carbon fiber reinforced resin member.

(17) The integrated molded body according to (16), wherein the plate material (A) is a carbon fiber reinforced resin member impregnated with a thermosetting resin.

(18) An integrated molded body comprising a plate material (A) whose one side surface is a design surface and a resin member (C) joined to at least a part of an outer edge of the plate material (A), characterized in that the resin member (C) comprises discontinuous carbon fibers and a thermoplastic resin, a weight average fiber length of the discontinuous carbon fibers is 0.3 to 3 mm, and a main component of the thermoplastic resin is a polycarbonate resin.

(19) A method for manufacturing an integrated molded body comprising at least the following step [1] and step [2]:

[1] a step of placing a plate material (A), whose one side surface is a design surface, inside a resin member (B) in a mold at a condition where at least a part of the plate material (A) is distanced from the resin member (B), and

[2] a step of integrally joining the plate material (A) and the resin member (B) at least at an outer peripheral edge part of the plate material (A) by injection molding a resin member (C) into a space between the plate material (A) and the resin member (B).

(20) The method for manufacturing an integrated molded body according to (19), wherein the plate material (A) and the resin member (B) are integrated at a condition being distanced from each other, by placing the plate material (A) inside the resin member (B) in the mold at a condition being distanced from the resin member (B) and injection molding the resin member (C) into the space.

(21) The method for manufacturing an integrated molded body according to (19) or (20), wherein at least a part of a surface on the design surface side of the integrated molded body becomes a region where the plate material (A), the resin member (B) and the resin member (C) are exposed, by injection molding the resin member (C) into the space from a side opposite to the design surface.

Effect according to the Invention

In the integrated molded body and the method for manufacturing the same according to the present invention, it is possible to join a plurality of structures to each other at high joining strength with the joint boundary part having excellent smoothness, reduce warpage even if a molded body has a constituent member of a plate material, and realize a reduction in weight/thickness.

Brief explanation of the drawings

[Fig. 1] Fig. 1 is a perspective view of a plate material (A) which is a constituent member of an integrated molded body according to an embodiment of the present invention.

[Fig. 2] Fig. 2 is a perspective view of a resin member (B) which is a constituent member of an integrated molded body according to an embodiment of the present invention.

[Fig. 3] Fig. 3 is a perspective view of an integrated molded body joining a plate material (A), a resin member (B) and a resin member (C) according to an embodiment of the present invention.

[Fig. 4] Fig. 4 is a plan view of the integrated molded body shown in Fig. 3.

[Fig. 5] Fig. 5 is a sectional view of the integrated molded body as viewed along line A-A' of Fig. 3 or Fig. 4.

[Fig. 6] Fig. 6 is a plan view of an integrated molded body having a standing wall shape portion extending downwardly according to another embodiment of the present invention.

[Fig. 7] Fig. 7 is a sectional view of the integrated molded body as viewed along line B-B' of Fig. 6.

[Fig. 8] Fig. 8 is a sectional view of the integrated molded body as viewed along line C-C' of Fig. 6.

[Fig. 9] Fig. 9 is a perspective view of an integrated molded body, in which a resin member (C) has a standing wall shape portion extending downwardly and a resin member (B) is placed at an end portion of the integrated molded body, according to a further embodiment of the present invention.

[Fig. 10] Fig. 10 is a plan view of the integrated molded body shown in Fig. 10.

[Fig. 11] Fig. 11 is a sectional view of the integrated molded body as viewed along line D-D' of Fig. 9 or Fig. 10.

[Fig. 12] Fig. 12 is a sectional view of the integrated molded body as viewed along line E-E' of Fig. 9 or Fig. 10.

[Fig. 13] Fig. 13 is a sectional view of an integrated molded body as viewed along line D-D' of Fig. 11 or Fig. 12, showing an embodiment in case where a thermoplastic resin layer (D) is adhered onto a surface of a plate material (A) at the side being joined with a resin member (C).

[Fig. 14] Fig. 14 is a sectional view of an integrated molded body as viewed along line E-E' of Fig. 11 or Fig. 12, showing an embodiment in case where a thermoplastic resin layer (D) is adhered onto a surface of a plate material (A) at the side being joined with a resin member (C).

[Fig. 15] Fig. 15 is a plan view of an integrated molded body comprising a plate material (A) one side surface of which is a design surface, and a resin member (C) joined to at least a part of an outer peripheral edge of the plate material (A), according to a further embodiment of the present invention.

[Fig. 16] Fig. 16 is a sectional view of the integrated molded body as viewed along line F-F' of Fig. 15.

[Fig. 17] Fig. 17 is a schematic sectional view showing a method for manufacturing an integrated molded body according to an embodiment of the present invention.

[Fig. 18] Fig. 18 is a perspective view of an integrated molded body manufactured in an Example in which a plate material (A) and a resin member (B) were joined through a resin member (C).

[Fig. 19] Fig. 19 is a plan view of the integrated molded body shown in Fig. 18.

[Fig. 20] Fig. 20 is a sectional view of the integrated molded body as viewed along line G-G' of Fig. 18 or Fig. 19.

[Fig. 21] Fig. 21 is a sectional view of the integrated molded body as viewed along line H-H' of Fig. 18 or Fig. 19.

[Fig. 22] Fig. 22 is a sectional view as viewed along a line corresponding to line G-G' of Fig. 18 or Fig. 19, showing dimensional shapes of an upper mold and a lower mold in a pair of molds facing each other used in an Example.

[Fig. 23] Fig. 23 is a sectional view as viewed along a line corresponding to line H-H' of Fig. 18 or Fig. 19, showing dimensional shapes of an upper mold and a lower mold in a pair of molds facing each other used in an Example.

[Fig. 24] Fig. 24 is a perspective view of an integrated molded body manufactured in an Example in which a resin member (B) is placed continuously on three sides of the integrated molded body.

[Fig. 25] Fig. 25 is a plan view of the integrated molded body shown in Fig. 24.

[Fig. 26] Fig. 26 is a sectional view of the integrated molded body as viewed along line I-I' of Fig. 24 or Fig. 25.

[Fig. 27] Fig. 27 is a sectional view of the integrated molded body as viewed along line J-J' of Fig. 24 or Fig. 25.

[Fig. 28] Fig. 28 is a perspective view of an integrated molded body manufactured in a Comparative Example in which a resin member (B) is placed at a close contact condition with a plate material (A).

[Fig. 29] Fig. 29 is a plan view of the integrated molded body shown in Fig. 28.

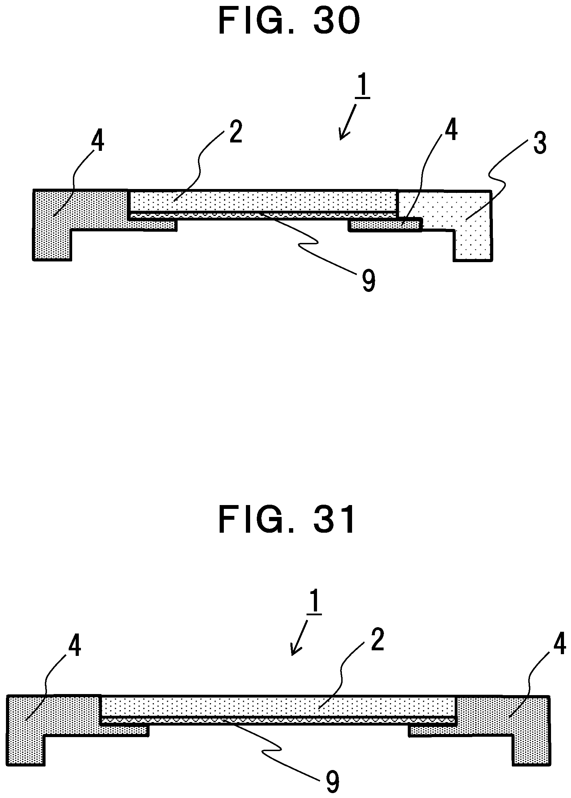

[Fig. 30] Fig. 30 is a sectional view of the integrated molded body as viewed along line K-K' of Fig. 28 or Fig. 29.

[Fig. 31] Fig. 31 is a sectional view of the integrated molded body as viewed along line L-L' of Fig. 28 or Fig. 29.

Embodiments for carrying out the Invention

Hereinafter, embodiments will be explained referring to drawings. Where, the present invention is not limited to the drawings and examples at all.

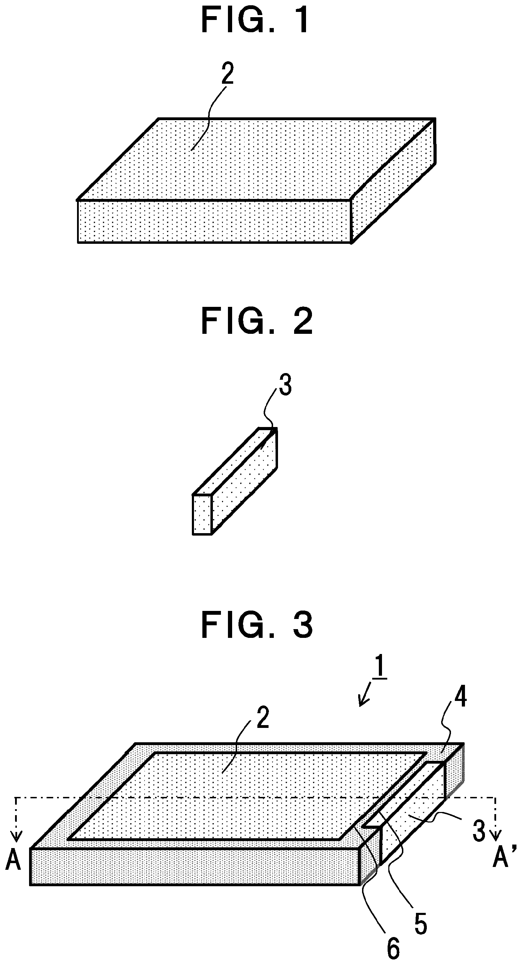

As shown in Figs. 1 to 5, an integrated molded body 1 according to an embodiment of the present invention has a configuration in which a resin member (C) 4 comprising discontinuous carbon fibers and a thermoplastic resin is interposed between a plate material (A) 2 one side surface of which is a design surface, and a resin member (B) 3, and which has a first joining part 5 at which the resin member (B) 3 is joined to the resin member (C) 4 and a second joining part 6 at which at least a partial region of an outer peripheral edge part of the plate material (A) 2 is joined to the resin member (C) 4.

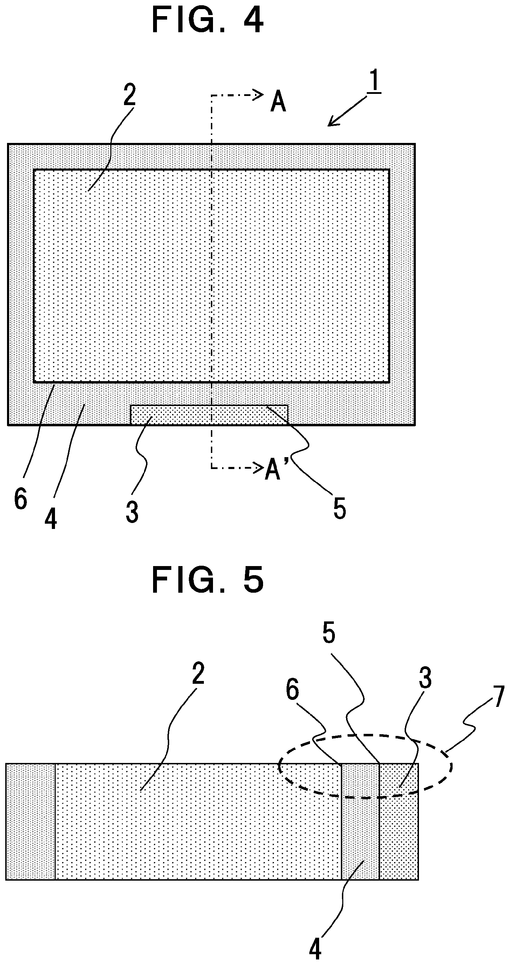

In the integrated molded body 1 according to the present invention, the plate material (A) 2 shown in the perspective view of Fig. 1 and the resin member (B) 3 shown in the perspective view of Fig. 2 are separately prepared in advance, and as shown in the perspective view of Fig. 3 or the plan view of Fig. 4, it has a configuration in which the resin member (C) 4 is interposed between the plate material (A) 2 and the resin member (B) 3. Here, among the joining parts in which both the plate material (A) 2 and the resin member (B) 3 are joined through the resin member (C) 4, a part joining the resin member (B) 3 and the resin member (C) 4 to each other is the first joining part 5, and a part joining at least a partial region of the outer peripheral edge part of the plate material (A) 2 and the resin member (C) 4 is the second joining part 6. Although Fig. 5 is a sectional view as viewed along line A-A' of Fig. 3 or Fig. 4, in order to clarify the arrangement configuration of the same members, the same sectional patterns as those in Fig. 3 or Fig. 4 are shown. The same manner is applied hereinafter.

By the condition where the resin member (C) 4 comprising discontinuous carbon fibers and a thermoplastic resin is interposed, and by the properties of a low specific gravity and a low shrinkage of the resin member (C) 4, a plurality of members constituting the integrated molded body 1 are joined with a high joining strength, and it is possible to reduce the warpage of the integrated molded body 1 having a plate material-shaped constituent member.

Further, in the present invention, it is preferred that the weight average fiber length of the discontinuous carbon fibers contained in the resin member (C) 4 is 0.3 to 3 mm.

Here, continuous fibers and discontinuous fibers will be defined. The continuous fibers indicate a state in that the reinforcing fibers contained in the integrated molded body 1 are arranged substantially continuously over the entire length or the entire width of the integrated molded body, and the discontinuous fibers indicate a state in that the reinforcing fibers are arranged discontinuously at a condition being separated. Generally, a unidirectional fiber reinforced resin, in which a resin is impregnated into reinforcing fibers aligned in one direction, corresponds to continuous fibers, and an SMC (Sheet Molding Compound) base material used for press molding, a pellet material containing reinforcing fibers used for injection molding or the like corresponds to the discontinuous fibers.

With respect to the discontinuous fibers, although pellet materials used for injection molding can be classified into two types of long fiber pellets and short fiber pellets, the long fibers handled in the present invention are defined as fibers remaining in a member formed with discontinuous fibers in the integrated molded body 1 and having a weight average fiber length of 0.3 mm or more, and short fibers are defined as fibers having a weight average fiber length less than 0.3 mm.

By the condition where the reinforcing fibers remaining in the resin member (C) 4 are long fibers, the shrinkage of the resin member (C) 4 can be reduced, and the warpage of the integrated molded body 1 can be further reduced. In case of short fibers having a weight average fiber length of less than 0.3 mm, the effect on low shrinkage is weakened, and it may not be possible to sufficiently reduce the warpage of the integrated molded body 1. If the weight average fiber length exceeds 3 mm, the resin viscosity becomes high, and it may be difficult to uniformly fill the resin member (C) 4 up to corners of the mold during injection molding. The weight average fiber length of the discontinuous carbon fibers is preferably 0.4 to 2.8 mm, more preferably 0.7 to 1.5 mm, further preferably 0.9 to 1.2 mm.

Here, the "weight average fiber length" in the present invention does not mean to simply employ a number average, but a method of calculating a weight average molecular weight is applied to the calculation of the fiber length, and it means an average fiber length calculated from the following equation considering the contribution of the fiber length. However, the following equation is applied assuming that the fiber diameter and density of the reinforcing fibers are constant.

$$\text{Weight average fiber length} = \Sigma(Mi^2 \times Ni)/\Sigma(Mi \times Ni)$$

Mi: Fiber length (mm)
Ni: Number of reinforcing fibers with fiber length Mi

The above-described weight average fiber length can be measured by the following method. The molded article is heat-treated at 500°C for 60 minutes, the reinforcing fibers in the molded article are taken out, and these reinforcing fibers are uniformly dispersed in water. After the dispersed water in which the reinforcing fibers are uniformly dispersed is sampled in a petri dish, it is dried, and observed with an optical microscope (magnification of 50 to 200 times). The lengths of 500 randomly selected reinforcing fibers are measured, and the weight average fiber length is calculated from the above-described equation.

Further, in the present invention, it is preferred that among inear expansion coefficients of the resin member (C) 4, a linear expansion coefficient in a resin flow direction is $1.0 \times 10^{-7}$ to $4.0 \times 10^{-5}$/K, and a linear expansion coefficient in a direction perpendicular to the resin flow direction is $1.0 \times 10^{-7}$ to $2.0 \times 10^{-5}$/K. Here, the resin flow direction means such that when a mold cavity is filled with the resin, in a state where the resin advances from a gate serving as an inlet into which the resin flows toward the mold cavity, the resin advancing direction is defined as the resin flow direction, and a direction perpendicular thereto is defined as the direction perpendicular to the resin flow direction. The method of measuring this linear expansion coefficient will be described later.

By using a resin having a small linear expansion coefficient, the deformation amount of the resin member (C) 4 can be reduced, and the warpage of the integrated molded body 1 can be further reduced. For example, in case where a resin is flowed to form a shape such as injection molding, it is generally known that the reinforcing fibers contained in the resin are oriented in accordance with the flow direction of the resin. Therefore, a small linear expansion coefficient in each of two directions of a resin flow direction and a direction perpendicular to the resin flow direction is effective for reducing the warpage of the integrated molded body 1. If the linear expansion coefficient in the resin flow direction exceeds $4.0 \times 10^{-5}$/K, or the linear expansion coefficient in the direction perpendicular to the resin flow direction exceeds $2.0 \times 10^{-5}$/K, the amount of warpage of the integrated molded body 1 may become large. Although it is effective that both the linear expansion coefficient in the resin flow direction and the linear expansion coefficient in the direction perpendicular to it are smaller than $1.0 \times 10^{-7}$/K for reducing the warpage of the integrated molded body 1, in order to achieve that, it is necessary to greatly increase the fiber content of the reinforcing fibers, which may hinder the flowability of the resin. The linear expansion coefficient of the resin member (C) 4 in the resin flow direction is preferably $2.0 \times 10^{-7}$ to $3.8 \times 10^{-5}$/K, more preferably $4.0 \times 10^{-7}$ to $3.0 \times 10^{-5}$/K, and further preferably $7.0 \times 10^{-7}$ to $2.0 \times 10^{-5}$/K. Further, linear expansion coefficient of the resin member (C) 4 in the direction perpendicular to the resin flow direction is preferably $2.0 \times 10^{-7}$ to $1.8 \times 10^{-5}$/K, more preferably $4.0 \times 10^{-7}$ to $1.5 \times 10^{-5}$/K, and further preferably $7.0 \times 10^{-7}$ to $1.0 \times 10^{-5}$/K.

Further, in the present invention, it is preferred that the main component of the thermoplastic resin contained in the resin member (C) 4 is a polycarbonate resin.

By using a polycarbonate resin, which has a smaller shrinkage than conventional nylon resins, for the resin member (C) 4, it is possible to reduce the warpage of the integrated molded body 1. Further, the resin absorbs less water, and the dependency on the surrounding humidity environment during use can be reduced. The main component means that the compounding weight ratio of the polycarbonate resin in the thermoplastic resin is 50% by weight or more. It is preferably 70% by weight or more, more preferably 90% by weight or more, and further preferably, it is all polycarbonate resin.

The polycarbonate resin is obtained by reacting a dihydric phenol with a carbonate precursor. It may be a copolymer obtained by using two or more dihydric phenols or two or more carbonate precursors. As examples of the reaction method, exemplified are an interfacial polymerization method, a melt transesterification method, a solid-phase transesterification method of a carbonate prepolymer, a ring-opening polymerization method of a cyclic carbonate compound, etc. Such a polycarbonate resin itself is known, and for example, the polycarbonate resin described in JP-A-2002-129027 can be used.

As examples of the dihydric phenol, exemplified are 1,1-bis(4-hydroxyphenyl)-3,3,5-trimethylcyclohexane, bis(4-hydroxyphenyl)alkane (bisphenol A and the like), 2,2-bis {(4-hydroxy-3-methyl)phenyl}propane, $\alpha,\alpha'$-bis(4-hydroxyphenyl)-m-diisopropylbenzene, 9,9-bis(4-hydroxy-3-methylphenyl)fluorene, etc. Two or more types of these may be used. Among these, bisphenol A is preferable, and a polycarbonate resin more excellent in impact resistance can be obtained. On the other hand, a copolymer obtained by using bisphenol A and another dihydric phenol is excellent in high heat resistance or low water absorption.

As the carbonate precursor, for example, carbonyl halide, carbonic acid diester, haloformate or the like is used, and concretely, phosgene, diphenyl carbonate, dihaloformate of dihydric phenol or the like can be exemplified.

When producing a polycarbonate resin from the above-described dihydric phenol and carbonate precursor, a catalyst, a terminal stopper, an antioxidant for preventing the oxidation of the dihydric phenol, and the like may be used, as needed.

Further, the polycarbonate resin in the present invention includes a branched polycarbonate resin obtained by copolymerizing a trifunctional or higher functional polyfunctional aromatic compound, a c polyester carbonate resin obtained by copolymerizing an aromatic or aliphatic (including alicyclic) difunctional carboxylic acid, a copolymerized polycarbonate resin obtained by copolymerizing a difunctional alcohol (including an alicyclic group), and a polyester carbonate resin obtained by copolymerizing such a difunctional carboxylic acid and a difunctional alcohol together. These polycarbonate resins are also known. Moreover, two or more types of these polycarbonate resins may be used.

Although the molecular weight of the polycarbonate resin is not specified, one having a viscosity average molecular weight of 10,000 to 50,000 is preferable. If the viscosity average molecular weight is 10,000 or more, the strength of the molded article can be more improved. It is more preferably 15,000 or more, and further preferably 18,000 or more. On the other hand, if the viscosity average molecular weight is 50,000 or less, molding processability is improved. It is more preferably 40,000 or less, and further preferably 30,000 or less. When two or more polycarbonate resins are used, it is preferred that at least one viscosity average molecular weight is within the above-described range. In this case, it is preferred to use a polycarbonate resin having a viscosity average molecular weight of more than 50,000, preferably more than 80,000 as the other polycarbonate resin. Such a polycarbonate resin has high entropy elasticity, which is advantageous when used in combination with gas-assisted molding, etc., and it exhibits a property derived from the high entropy elasticity (anti-drip property, draw down property, and a property for improving melting property such as jetting improvement).

Further, in the present invention, it is preferred that in the resin member (C) 4, in addition to the polycarbonate resin, at least one resin selected from polybutylene terephthalate (PBT) resin, acrylonitrile-butadiene-styrene (ABS) resin and polyethylene terephthalate (PET) resin is contained.

Polybutylene terephthalate (PBT) resin, acrylonitrile-butadiene-styrene (ABS) resin, and polyethylene terephthalate (PET) resin are inferior in mechanical properties and impact properties to polycarbonate resin, but because they are excellent in flowability, they can be preferably used by containing them in the resin member (C) 4, for the purpose of improving the flowability of the polycarbonate resin. These resin types have a good compatibility with the polycarbonate resin, and they can be preferably used because the properties thereof hard to absorb water can suppress deformation of the resin member (C) 4 due to moisture absorption. The content relative to the polycarbonate resin is preferably 3 parts by weight or more and 50 parts by weight or less when the total weight of the mixed resin is 100 parts by weight, more preferably 5 parts by weight or more and 20 parts by weight or less, further preferably 8 parts by weight or more and 15 parts by weight or less. If the content exceeds 50 parts by weight, the mechanical properties and impact property of the resin member (C) 4 may not be sufficiently obtained, and if it is less than 3 parts by weight, the flowability may be insufficient.

Further, in the present invention, it is preferred that the density of the resin member (C) 4 is 1.0 to 1.4 $g/cm^3$. By this, the weight of the integrated molded body 1 can be reduced. If the density exceeds 1.4 $g/cm^3$, it may be difficult to reduce the weight of the integrated molded body 1. If the density is less than 1.0 $g/cm^3$, the content of the reinforcing fibers added to the resin becomes small, and it may not be possible to sufficiently improve the strength of the integrated molded body 1. The density is more preferably 1.1 to 1.35 $g/cm^3$, and further preferably 1.2 to 1.3 $g/cm^3$.

Further, in the present invention, it is preferred that the fiber weight content of the resin member (C) 4 is 5 to 30% by weight. By this, the shrinkage of the resin member (C) 4 can be suppressed, and the warpage of the integrated molded body 1 can be reduced. If it is less than 5% by weight, it may be difficult to secure the strength of the integrated molded body 1, and if it exceeds 30% by weight, the filling of the resin member (C) 4 may be partially insufficient in the injection molding. The fiber weight content is more preferably 8 to 28% by weight, and further preferably 12 to 25% by weight.

Further, in the present invention, it is preferred that the volume of the resin member (C) 4 is 2 to 30 times the volume of the resin member (B) 3. By this, the shrinkage of the resin can be suppressed by increasing the proportion of the resin member (C) 4 present in the integrated molded body 1, and as a result, the warpage of the integrated molded body 1 can be reduced. If the volume of the resin member (C) 4 is less than 2 times the volume of the resin member (B) 3, it may be difficult to reduce the warpage of the integrated molded body 1. If the volume exceeds 30 times, the volume of the resin member (B) 3 becomes relatively small and a sufficient joining area may not be obtained. The volume is more preferably 5 to 25 times, further preferably 10 to 20 times.

Further, in the present invention, it is preferred that the second joining part 6 is formed over the entire outer peripheral edge part of the plate material (A) 2. As shown in Fig. 3, Fig. 4 or Fig. 5, by forming the second joining part 6 over the entire outer peripheral edge part of the plate material (A) 2 and joining it with the joining resin member (C) 4, as a whole of the integrated molded body 1, high joining strength and reduction in thickness can be realized.

Further, in the present invention, it is preferred that the plate material (A) 2 and the resin member (B) 3 are placed at a condition distanced from each other. As shown in Fig. 3, Fig. 4 or Fig. 5, the plate material (A) 2 and the resin member (B) 3 do not have a portion in contact with each other,, but face each other via the resin member (C) 4 interposed therebetween. By this, the injected resin member (C) 4 is easily inserted between the plate material (A) 2 and the resin member (B) 3, and the joining strength of the integrated molded body 1 can be improved.

Further, in the present invention, it is preferred that at least a part of the surface on the design surface side of the integrated molded body 1 has a region 7 where the plate material (A) 2, resin member (B) 3 and resin member (C) 4 are exposed. In the form of joining using an adhesive in the conventional technology, the adhesive may exude, and in such a case, the exuding adhesive must be removed, and further, a very high dimensional accuracy is required for positioning between the members to be joined. On the other hand, in the present invention, as shown in Fig. 4 or Fig. 5, the resin member (C) 4 is interposed between the plate material (A) 2 and the resin member (B) 3 to which the resin member (C) 4 is joined, and by molding so that the resin member (C) 4 is exposed between them, the resin material (A) 2 and resin member (B) 3 can be easily joined formed by the resin member (C) 4 as long as a certain dimensional accuracy is secured. In Fig. 5, the upper side is the design surface side. Further, the plate material (A) 2, resin member (C) 4 and resin member (B) 3 are arranged on the molding surface of the mold so that they are flush with each other on the design surface during molding, and the smoothness of exposed area 7 (Fig. 5) is improved.

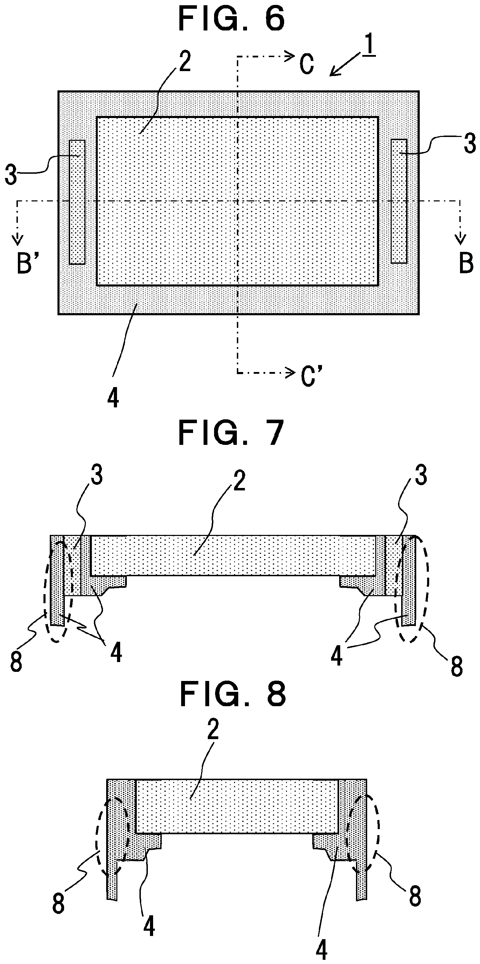

Further, in the present invention, it is preferred that at least a part of the resin member (C) 4 has a standing wall shape portion 8. By providing the standing wall shape portion 8 to the resin member (C) 4 arranged on the side surface portion of the integrated molded body 1 in a form of extending downwardly as shown in the plan view of Fig. 6 and the sectional views of Fig. 7 and Fig. 8, the integrated molded body 1 can be formed as a box-shaped body. Fig. 7 shows a sectional view as viewed along line B-B' of Fig. 6, and Fig. 8 shows a sectional view as viewed along line C-C' of Fig. 6. The integrated molded body 1 according to this embodiment shows an embodiment in which a plurality of resin members (B) 3 are provided on both sides of the integrated molded body 1, and by providing a plurality of resin members (B) 3, for example, the arrangement configuration of an antenna component can be made flexible.

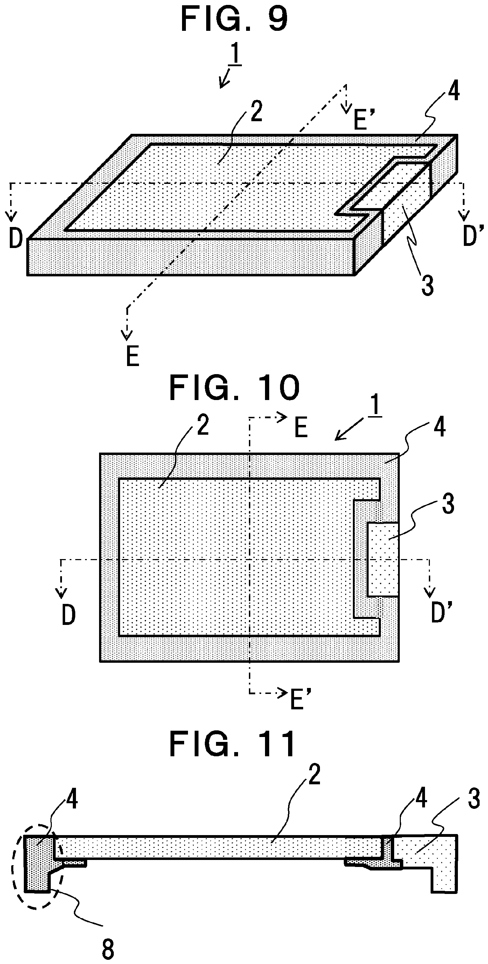

Further, in the perspective view of Fig. 9 or the plan view of Fig. 10, an embodiment is shown wherein the resin member (C) 4 has the standing wall shape portion 8 extending downwardly, and the resin member (B) 3 is placed at an end portion of the integrated molded body 1. Fig. 11 shows a sectional view as viewed along the line D-D' of Fig. 9 or Fig. 10, and Fig. 12 shows a sectional view as viewed along the line E-E' of Fig. 9 or Fig. 10. By placing the resin member (B) 3 at the end portion of the integrated molded body 1, for example, the directivity of the radio wave radiated from an antenna component can be widened.

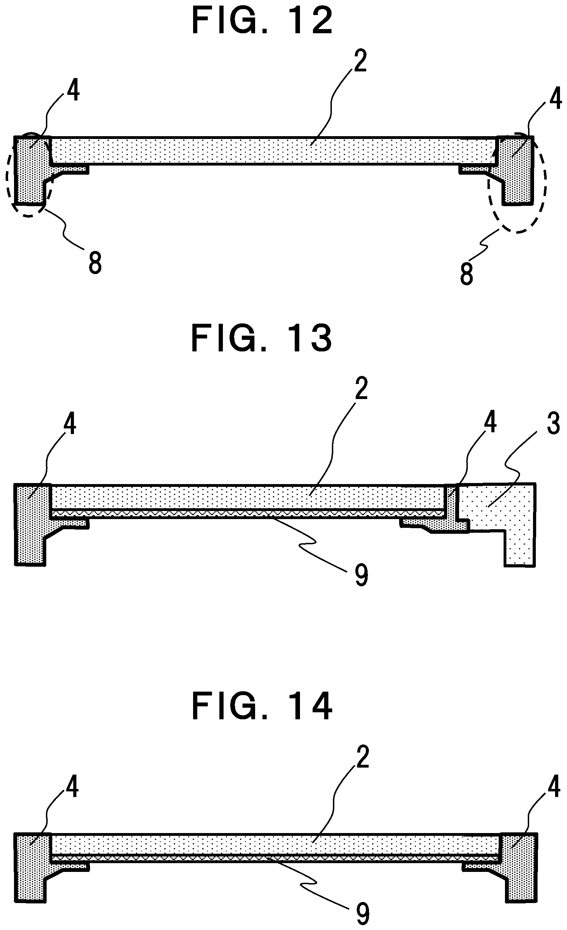

Further, in the present invention, a structure is also preferred wherein the plate material (A) 2 and the joining resin member (C) 4 are joined via a thermoplastic resin layer (D) 9. As shown in the sectional view of Fig. 13 or Fig. 14, the thermoplastic resin layer (D) 9 is adhered in advance onto the surface of the plate material (A) 2 on the side that is to be joined to the resin member (C) 4, and thereafter, the resin member (C) 4 is injection molded. By this, the plate material (A) 2 is joined to the molten resin member (C) 4 via the thermoplastic resin layer (D) 9 to realize a high joining strength as the integrated molded body 1. Further, by using a thermosetting resin for the plate material (A) 2, it is possible to obtain properties of lightweight, thin wall, high rigidity, and impact resistance. As the thermoplastic resin layer (D) 9, a thermoplastic resin film or a non-woven fabric of thermoplastic resin can be appropriately used.

Further, in the present invention, it is preferred that the resin member (B) 3 comprises discontinuous glass fibers having a weight average fiber length of 0.1 to 0.7 mm and a thermoplastic resin. By making the resin member (B) 3 a resin member containing glass fibers, the resin member (B) 3 can be provided with a function as a radio wave transmitting member. Further, by setting the weight average fiber length of the discontinuous glass fibers at 0.1 to 0.7 mm, it is possible to secure the balance between the strength of the resin member (B) 3 and the flowability of the resin. If the weight average fiber length is less than 0.1 mm, the strength of the resin member (B) 3 may be insufficient. If the weight average fiber length exceeds 0.7 mm, the resin viscosity becomes high, which may make it difficult to uniformly fill the corners of the resin member (B) 3 during injection molding. The weight average fiber length is more preferably 0.2 to 0.6 mm, and further preferably 0.3 to 0.5 mm.

Further, a thermoplastic resin can be used as the resin member (B) 3, and a joined structure is formed wherein the thermoplastic resin of the resin member (B) 3 is melt-fixed to the resin member (C) 4. By this, a higher joining strength can be realized as the integrated molded body 1. The melt-fixed joined structure means a joined structure in which mutual members are molten by heat and fixed by being cooled. Further, a thermosetting resin can also be used as the resin member (B) 3, the thermoplastic resin layer (D) 9 is adhered in advance to the surface of the resin member (B) 3 which is to be joined to the resin member (C) 4, and thereafter, the resin member (C) 4 is injection molded. By this, the resin member (B) 3 is joined to the molten resin member (C) 4 via the thermoplastic resin layer (D) 9 to be able to realize a high joining strength as the integrated molded body 1. Further, by using a thermosetting resin for the resin member (B) 3, it is possible to obtain lightweight, thin-walled, high rigidity and impact resistance. As the thermoplastic resin layer (D) 9, a thermoplastic resin film or a non-woven fabric of thermoplastic resin can be appropriately used.

Further, in the present invention, it is preferred that the resin member (B) 3 is a radio wave transmitting member. As described above, by making the resin member (B) 3 as a resin member containing glass fibers, a radio wave transmitting function can be given.

Further, in the present invention, it is preferred that the plate material (A) 2 includes has a structure including any one of a metal member and a carbon fiber reinforced resin member. From the viewpoint of increasing the strength and rigidity of the integrated molded body 1, it is preferred to use a member having high strength and high rigidity, and further excellent in lightness, for the plate material (A) 2. From the viewpoint of high strength and high rigidity, it is preferred to use a metal member or a fiber reinforced resin member, and for the purpose of further improving the lightness, a sandwich structure, in which one or more kinds of core members selected from a resin sheet, a foam, and a material expanded with a discontinuous fiber reinforced resin prepared by containing discontinuous fibers in a resin in its thickness direction, are used as a core layer, and a metal member or a fiber reinforced resin member is used as a skin layer, and both sides of the core layers are sandwiched by skin layers, is more preferably employed. Furthermore, high rigidity and reduction in weight/thickness can be realized by using a carbon fiber reinforced resin member in which carbon fibers are used as the reinforcing fibers of the fiber reinforced resin member.

As the material of the metal member, can be exemplified an element selected from titanium, steel, stainless steel, aluminum, magnesium, iron, silver, gold, platinum, copper, nickel, or an alloy containing these elements as a main component. Further, a plating processing can be performed as needed.

As the resin used for the fiber reinforced resin member, the carbon fiber reinforced resin member or the core member, a thermoplastic resin or a thermosetting resin can be suitably used.

There is no particular limitation on the type of the thermoplastic resin forming the plate material (A) 2 or the resin member (B) 3, and any of the thermoplastic resins exemplified below can be used. For example, exemplified are polyester resins such as polyethylene terephthalate (PET) resin, polybutylene terephthalate (PBT) resin, polytrimethylene terephthalate (PTT) resin, polyethylene naphthalate (PEN) resin and liquid crystal polyester resin, polyolefin resins such as polyethylene (PE) resin, polypropylene (PP) resin and polybutylene resin, polyoxymethylene (POM) resin, polyamide (PA) resin, polyarylene sulfide resin such as polyphenylene sulfide (PPS) resin, polyketone (PK) resin, polyether ketone (PEK) resin, polyetheretherketone (PEEK) resin, polyetherketoneketone (PEKK) resin, polyethernitrile (PEN) resin, fluorine resin such as polytetrafluoroethylene resin, crystalline resin such as liquid crystal polymer (LCP), and in addition to styrene-based resin, amorphous resins such as polycarbonate (PC) resin, polymethylmethacrylate (PMMA) resin, polyvinyl chloride (PVC) resin, polyphenylene ether (PPE) resin, polyimide (PI) resin, polyamide imide (PAI) resin, polyetherimide (PEI) resin, polysulfone (PSU) resin, polyethersulfone resin and polyarylate (PAR) resin, and as others, thermoplastic elastomers such as phenolic-based resin, phenoxy resin, further, polystyrene-based resin, and polyolefin-based resin, polyurethane-based resin, polyester-based resin, polyamide-based resin, polybutadiene-based resin, polyisoprene-based resin, fluorine-based resin and acrylonitrile-based resin, and thermoplastic resins selected from copolymers and modified products thereof. Among them, from the viewpoint of lightness of the obtained molded article, a polyolefin resin is preferred, from the viewpoint of strength, a polyamide resin is preferred, from the viewpoint of surface appearance, an amorphous resin such as polycarbonate resin, styrene-based resin or modified polyphenylene ether-based resin is preferred, from the viewpoint of heat resistance, a polyarylene sulfide resin is preferred, and from the viewpoint of continuously used temperature, a polyether ether ketone resin is preferably used.

Further, as examples of the thermosetting resin forming the plate material (A) 2, thermosetting resins such as unsaturated polyester resin, vinyl ester resin, epoxy resin, phenol (resole type) resin, urea/melamine resin, polyimide resin, maleimide resin and benzoxazine resin can be preferably used. These may be applied by blending two or more types. Among these, an epoxy resin is particularly preferable from the viewpoint of mechanical properties of a molded body and heat resistance. The epoxy resin is preferably contained as a main component of the resin used, in order to exhibit its excellent mechanical properties, and concretely, it is preferably contained at an amount of 60% by weight or more per the resin composition.

Further, it is preferred to select and use at least one kind of organic fibers, ceramic fibers or metal fibers as the reinforcing fibers forming the plate material (A) 2, and two or more kinds of these reinforcing fibers may be used in combination. As the organic fibers, exemplified are aramid fibers, PBO fibers, polyphenylene sulfide fibers, polyester fibers, acrylic fibers, nylon fibers, polyethylene fibers, and the like, and as the ceramic fibers, exemplified are glass fibers, carbon fibers, silicon carbide fibers, silicon nitride fibers, and the like. Further, as the metal fibers, exemplified are aluminum fibers, brass fibers, stainless fibers, and the like. From the viewpoint of rigidity and lightness, it is preferred to use glass fibers or carbon fibers, and more preferably carbon fibers.

As the carbon fibers forming the plate material (A) 2 or the resin member (C) 4, from the viewpoint of weight reduction effect, carbon fibers of polyacrylonitrile (PAN)-based, pitch-based, rayon-based, etc. having excellent specific strength and specific rigidity are preferably used.

Further, as the integrated molded body 1 of the present invention, one is also provided wherein the integrated molded body 1 is formed from a plate material (A) 2 whose one side surface is a design surface and a resin member (C) 4 which is joined to at least a part of the outer edge of the plate material (A) 2, the resin member (C) 4 comprises discontinuous carbon fibers and a thermoplastic resin, the weight average fiber length of the discontinuous carbon fibers is 0.3 to 3 mm, and the main component of the thermoplastic resin is a polycarbonate resin.

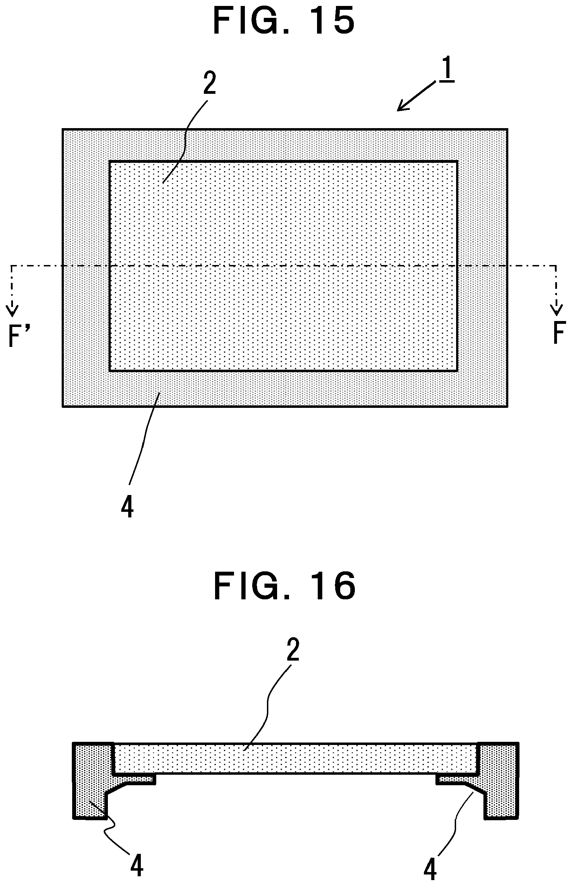

As shown in the plan view of Fig. 15 or the sectional view of Fig. 16, by employing the structure in which the resin member (C) 4 is joined to at least a part of the outer edge of the plate material (A) 2, and by using discontinuous carbon fibers having a certain weight average fiber length and a thermoplastic resin whose main component is a polycarbonate resin in combination for the resin member (C) 4, the shrinkage of the resin member (C) 4 can be more reduced, and the warpage of the integrated molded body 1 can be further reduced effectively.

The preferable range of the weight average fiber length of the discontinuous carbon fibers and the preferable kind and compounding amount of the polycarbonate resin are as aforementioned. Further, as aforementioned, the density of the resin member (C) 4 is preferably 1.0 to 1.4 $g/cm^3$, and the fiber weight content of the resin member (C) 4 is preferably 5 to 30% by weight.

Next, a method for manufacturing an integrated molded body according to the present invention will be explained with reference to the drawings.

The present invention provides a method for manufacturing an integrated molded body 1 having at least the following steps [1] and [2].

[1] a step of placing a plate material (A) 2, whose one side surface is a design surface, inside a resin member (B) 3 in a mold at a condition where at least a part of the plate material (A) 2 is distanced from the resin member (B) 3, and
[2] a step of integrally joining the plate material (A) 2 and the resin member (B) 3 at least at an outer peripheral edge part of the plate material (A) 2 by injection molding a resin member (C) 4 into a space between the plate material (A) 2 and the resin member (B) 3.

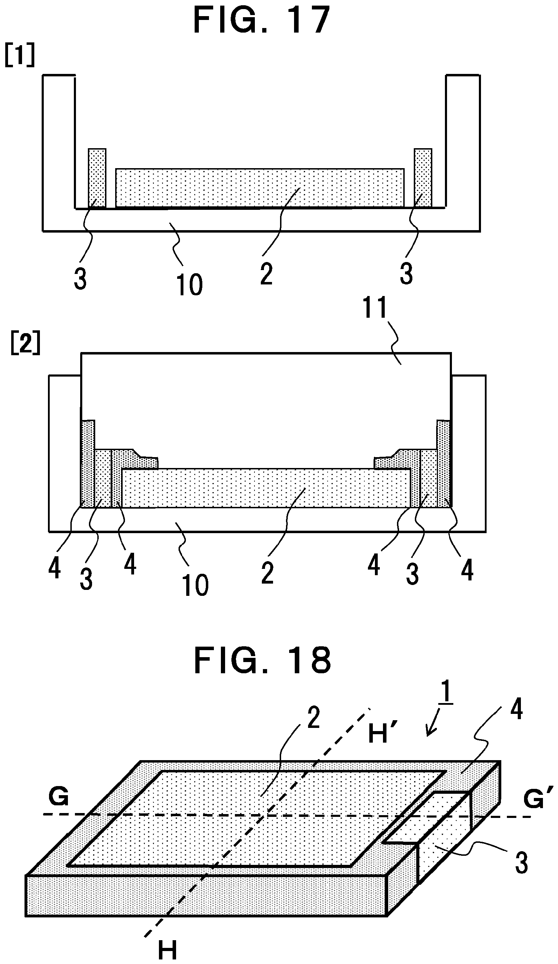

An example of the steps of the manufacturing method of the present invention will be explained with reference to Fig. 17.

First, the plate material (A) 2 shown in Fig. 1 and the quadrangular resin member (B) 3 shown in Fig. 2 are separately molded in advance. As shown in Fig. 17 [1], they are placed and aligned at a condition where the plate material (A) 2 is placed inside the resin member (B) 3 at a state being distanced with at least a part thereof from the resin member (B) 3 and at a state in which the design surface side of the plate material (A) 2 is placed on a lower mold 10 side.

Thereafter, as shown in Fig. 17 [2], an upper mold 11 is set, and the molted resin member (C) 4 is injection molded into a space formed between the plate material (A) 2 and the resin member (B) 3. By this, the plate material (A) 2 is joined and integrated with the resin member (B) 3 at the outer peripheral edge part of the plate material (A) 2 at a condition where the resin member (C) 4 is interposed between the plate material (A) 2 and the resin member (B) 3. Insert injection molding and outsert injection molding are preferably used.

Further, in the manufacturing method of the present invention, a method is preferred wherein the plate material (A) 2 and the resin member (B) 3 are integrated at a condition being distanced from each other, by placing the plate material (A) 2 inside the resin member (B) 3 in the mold at a condition being distanced from the resin member (B) 3 and injection molding the resin member (C) 4 into the space.

Further, in the manufacturing method of the present invention, it is preferred that at least a part of a surface on the design surface side of the integrated molded body 1 becomes a region where the plate material (A) 2, the resin member (B) 3 and the resin member (C) 4 are exposed, by injection molding the resin member (C) 4 into the space from a side opposite to the design surface.

As shown in Fig. 17 [2], by placing the plate material (A) 2 and the resin member (B) 3 in the lower mold 11 at a state where the surfaces thereof are flush with each other, and injection-molding the molten resin member (C) 4 into the space formed between the plate material (A) 2 and the resin member (B) 3, all the surfaces of the three members are exposed flush with each other on the bottom surface of the mold, and the surface design can be improved at the joining parts of the integrated molded body.

Examples:

Hereinafter, the integrated molded body 1 of the present invention and the method for manufacturing the same will be concretely explained by way of examples, but the following examples do not limit the present invention. First, the determination methods used in the examples will be described below.

(1) Molding shrinkage of resin

A resin used for measurement was molded using a mold having a mold cavity of 60 mm in length $\times$ 60 mm in width $\times$ 2 mm in depth, based on type D2 of JIS K7152-3. Using SE75DUZ-C250 injection molding machine supplied by Sumitomo Heavy Industries, Ltd., in case where the matrix resin was a polycarbonate resin, set were injection time: 10 seconds, injection speed: 30 mm/s, back pressure: 10 MPa, cylinder temperature: 300° C, and mold temperature: 100°C. In case of a nylon resin, molding was performed changing the cylinder temperature to 260°C and the mold temperature to 60°C.

The dimensions of the molded article were measured in the resin flow direction of the obtained flat plate test piece and in the direction perpendicular to the resin flow direction, and the molding shrinkage in each direction was determined using the following equation. Where, the resin advancing direction when filling in the mold was defined as the resin flow direction. Further, the measurement of the dimensions of the molded article was performed immediately after molding and after immersion in 20° C water.

$$\text{Molding shrinkage (\%)} = (\text{mold cavity size - molded article size}) / (\text{mold cavity size}) \text{ x } 100$$

(2) Flow length

The flowability of the resin was confirmed using an Archimedes type spiral flow mold (flow path width 10 mm x thickness 2 mm). The injection conditions in case where the matrix resin was a polycarbonate resin were set at injection time: 10 seconds, injection speed: 100 mm/s, injection pressure: 60 MPa, back pressure: 10 MPa, cylinder temperature: 300°C, and mold temperature: 80°C. In case of a nylon resin, set were the cylinder temperature: 260°C and the mold temperature: 60°C. The length of the molded article in the flow path direction was measured.

(3) Evaluation of radio wave transmission

In order to determine the electric field shielding property in the region of the resin member (B) 3 of the integrated molded body 1, it was evaluated using KEC method. When the electric field strength of the space measured when there is no measurement sample is $E_0$ [V/m] and the electric field strength of the space measured when there is a measurement sample is Ex [V/m], the electric field shielding property is determined by the following equation. With respect to the sign of the measured value, the positive direction is a direction in which a shielding effect is exhibited.

$$\text{Electric field shielding property (shielding effect)} = 20 \log_{10} E_0/E_X \ [dB]$$

The radio wave transmission of the resin member (B) was determined from the measurement results of the measured electric field shielding properties. As a criterion for determining the radio wave transmission, a case of 0 dB or more and less than 10 dB was determined to be present with radio wave transmission, and a case of 10 dB or more was determined to be not present with radio wave transmission.

(4) Measurement of weight average fiber length

The weight average fiber length Lw of the reinforcing fibers contained in the resin member (B) 3 and resin member (C) 4 is measured. A part of the resin member (B) 3 or resin member (C) 4 to be measured from the integrated molded body 1 was cut out and heated in an electric furnace at 500° C for 60 minutes to sufficiently incinerate and remove the resin, so that only the reinforcing fibers were separated. 400 or more fibers were randomly extracted from the separated reinforcing fibers. The fiber lengths of these extracted reinforcing fibers were measured using an optical microscope, the lengths of 400 fibers were measured to the unit of 1 $\mu$m, and the weight average fiber length Lw was calculated using the following equation.

$$\text{Weight average fiber length Lw} = \Sigma(\text{Mi}^2 \times \text{Ni}) \ / \ \Sigma(\text{Mi} \times \text{Ni})$$

   Mi: Fiber length (mm)
   Ni: Number of reinforcing fibers with fiber length Mi

(5) Determination of density

The density of the resin member (B) 3 or resin member (C) 4 cut out from the integrated molded body 1 was determined using submersible substitution method.

(6) Determination of fiber weight content

The fiber weight content of resin member (B) 3 and resin member (C) 4 was determined by the following method. The resin member (B) or resin member (C) to be determined was cut out from the integrated molded body 1 and the weight w0 (g) thereof was measured. Next, the cut-out sample was heated in air at 500° C for 1 hour to sufficiently incinerate and remove the resin component, and the weight wl (g) of the remaining reinforcing fibers was measured. The fiber weight content (wt%) was determined using the following equation. The measurement was performed at n=3, and the average value was used.

$$\text{Fiber weight content (wt\%)} = (\text{weight of reinforcing fibers w1} \ / \ \text{weight of cut sample w0}) \times 100$$

(7) Warpage amount of integrated molded body immediately after molding

At a state where the design surface side of the box-shaped integrated molded body 1 was faced upward, the displacement (mm) in the thickness direction of the top plate (plate material (A) 2) was measured within 1 hour from the molding as follows. The measuring points were set at the central portion of the top plate (plate material (A) 2), the four corner portions of the integrated molded body 1, and four central portions of respective long sides and short sides (total 9 points). Where, the measurement points other than the central portion of the top plate (plate material (A) 2) were 2 mm inside from each long side and each short side, and a three-dimensional measuring instrument was used for the measurement.

The warpage amount on the long side and the short side was derived from the displacement (mm) at the remaining 8 points, which does not include the displacement (mm) at the central portion of the top plate (plate material (A) 2). For the warpage amount on the long side, first, among the three displacements (mm) obtained from one long side, the distance between the straight line connecting the two end points and the center point was determined. Next, in the same manner, the distance between the straight line connecting the two end points and the center point was determined from the other long side, and the average value of the distances determined from the two long sides was used as the warpage amount of the long side. Similarly, the warpage amount of the short side was derived.

The warpage amount of diagonal was derived from the displacement (mm) at the center of the top plate (plate material (A) 2) and the displacements (mm) at the four corner portions. Similar to the method of deriving the warpage amount on the long side, the distance between the straight line connecting the two diagonal corners of the integrated molded body 1 and the central point of the top plate (plate material (A) 2) was determined with respect to each of the two diagonals, and the average value of those distances was taken as the warpage amount of the diagonal.

Further, the value obtained by summing the obtained respective warpage amounts was evaluated according to the following criteria. A, B and C are acceptable, and D is not acceptable.

A: The total of respective warpage amounts is less than 1.0 mm.
B: The total of respective warpage amounts is 1.0 mm or more and less than 2.0 mm.
C: The total of respective warpage amounts is 2.0 mm or more and less than 3.0 mm.
D: The total of respective warpage amounts is 3.0 mm or more.

(8) Warpage amount of integrated molded body after moisture absorption

After leaving the integrated molded body 1 for 48 hours in an environment of a temperature of 50°C and a humidity of 95%, it was held in an environment of a temperature of 20°C and a humidity of 40% for 1 hour, and then, the warpage amount of the integrated molded body was determined in a manner similar to that in the above-described item (7). However, the measurement points were only the two long sides of the integrated molded body 1, and the average value of these two warpage amounts was used as the warpage amount after moisture absorption and evaluated according to the following criteria. A, B and C are acceptable, and D is not acceptable.

A: The total of respective warpage amounts is less than 1.0 mm.
B: The total of respective warpage amounts is 1.0 mm or more and less than 2.0 mm.
C: The total of respective warpage amounts is 2.0 mm or more and less than 3.0 mm.
D: The total of respective warpage amounts is 3.0 mm or more.

(9) Warpage amount of integrated molded body

The comprehensive evaluation of the warpage amount of the integrated molded body 1 was evaluated according to the following criteria based on the evaluation results of the warpage amounts immediately after molding and after moisture absorption. A, B and C are acceptable, and D is not acceptable.

A: Case where all are determined as A
B: Case where C and D determinations are not included and at least one is determined as B
C: Case where D determination is not included and at least one is determined as C
D: Case where at least one is determined as D

(10) Measurement of linear expansion coefficient of resin used for resin member (C)

In order to measure the linear expansion coefficient of the resin used for the resin member (C) 4, a square plate was produced using a mold having a mold cavity of 60 mm in length × 60 mm in width × 5 mm in depth. A cubic test piece having a side of 5 mm was cut out from this square plate, and the linear expansion coefficient was measured using a thermomechanical measuring device (TMA). The upper and lower surfaces of the test piece were surfaced in advance with a water resistant abrasive paper #1500. The measurement was performed under the condition of a temperature elevation rate of 5 °C/min while a load of 0.05 N was applied. The linear expansion coefficient was calculated from the average slope of the obtained straight line in the zone from -50°C. to 125°C. Where, the measurement direction was performed in two directions of a resin flow direction and a direction perpendicular to the resin flow direction. In this measurement, the advancing direction in which the resin was filled into the cavity of the mold was taken as the flow direction of the resin in the test piece. Where, in case where the linear expansion coefficient of the resin used for the resin member (C) was measured after actually molding the integrated molded body according to the present invention, particularly, in case where the resin member (C) was a resin member molded by injection molding, an appropriate small-size sample was cut out from the resin member (C), only the resin in the sample was burned off to leave only the aggregates of discontinuous carbon fibers, and the direction in which most discontinuous carbon fibers in the aggregates of discontinuous carbon fibers were oriented was taken as the resin flow direction. After specifying the resin flow direction, from any part of the resin member (C) in the integrated molded body, in the same manner as above, a test piece having a shape of a cube with one side of 5 mm or a flat plate of a square with one side of 5 mm and an arbitrary thickness, or a test piece having a shape corresponding thereto, was cut out, and the linear expansion coefficient was measured and calculated in the same manner as described above in the two directions of the resin flow direction and the directions perpendicular to the flow direction. The unit of the linear expansion coefficient is [/K].

Further, based on the result of determining the linear expansion coefficient in each direction, the evaluation was carried out by the following criteria. In all cases, A, B, and C are acceptable, and D is not acceptable. Furthermore, a comprehensive evaluation of the linear expansion coefficient was performed based on the evaluation in each direction.

(Criteria for evaluating linear expansion coefficient in the flow direction)

    A: Linear expansion coefficient is less than $2.0 \times 10{-5}$/K.
    B: Linear expansion coefficient is $2.0 \times 10^{-5}$ /K to $3.0 \times 10^{-5}$/K.
    C: Linear expansion coefficient is $3.0 \times 10^{-5}$/K to $4.0 \times 10^{-5}$/K.
    D: Linear expansion coefficient exceeds $4.0 \times 10^{-5}$/K.

(Criteria for evaluating linear expansion coefficient in the direction perpendicular to the flow direction)

    A: Linear expansion coefficient is less than $1.0 \times 10^{-5}$/K.
    B: Linear expansion coefficient is $1.0 \times 10^{-5}$/K to $1.5 \times 10^{-5}$/K.
    C: Linear expansion coefficient is $1.5 \times 10^{-5}$/K to $2.0 \times 10^{-5}$/K.
    D: Linear expansion coefficient exceeds $2.0 \times 10^{-5}$/K.

(Comprehensive evaluation of linear expansion coefficient)

    A: Case where both the evaluation results in two directions are determined as A
    B: Case where the evaluation results in two directions do not include C and D, and at least one is determined as B
    C: Case where the evaluation results in two directions do not include D, and at least one is determined as C
    D: Case where at least one of the evaluation results in the two directions is determined as D

(11) Smoothness of joint boundary line of integrated molded body

At the joint part of the integrated molded body 1, using a surface roughness meter, the head of the surface roughness meter was scanned so as to cross the joint part perpendicularly to the joint boundary line, and the surface roughness of the integrated molded body 1 was measured (the measuring method was based on JIS-B-0633 (2001)). The roughness curve was determined from the displacement in the thickness direction of the plate material (A) 2 (referred to as Y direction, unit: μm) and the measurement stroke (unit: mm). As the measurement conditions, a measurement stroke of 20 mm, a measurement speed of 0.3 mm/s, a cutoff value of 0.3 mm, a filter type of Gaussian, and no tilt correction were selected. The joint part was set at a portion of 10 mm, which was the midpoint of the measurement stroke. Here, the difference between the maximum Y-direction displacement of the peak and the minimum Y-direction displacement of the valley bottom in the obtained roughness curve was defined as the level difference of the joint part. Where, in this example, "Surfcom" 480A manufactured by Tokyo Seimitsu Co., Ltd. was used as the surface roughness meter. By the above-described method, the level differences of the respective joint parts between the plate material (A) 2 and the resin member (C) 4, the plate material (A) 2 and the resin member (B) 3, and the resin member (B) 3 and the resin member (C) 4 were determined. The determined level difference of the joint part was evaluated according to the following criteria. Further, comprehensive evaluation was performed based on the following criteria based on the determination result of the level difference of each joint part. In all cases, A, B, and C are acceptable, and D is not acceptable.

(Criteria for evaluating level difference of each joint part)

A: Level difference at the joint part is less than 8 $\mu$m.
B: Level difference at the joint part is 8 $\mu$m or more and less than 10 $\mu$m.
C: Level difference at the joint part is 10 $\mu$m or more and less than 12 $\mu$m.
D: Level difference at the joint part is 12 $\mu$m or more.

(Criteria of determining comprehensive evaluation for level difference of joint part)

A: Case where all are determined as A
B: Case where C and D determinations are not included and at least one is determined as B
C: Case where D determination is not included and at least one is determined as C
D: Case where at least one is determined as D

(12) Comprehensive evaluation of integrated molded body

Based on the judgment result of three comprehensive evaluations of the warpage amount of the integrated molded body 1, the linear expansion coefficient of the joining resin (C) 4, and the smoothness of the joint boundary line of the integrated molded body 1, the comprehensive evaluation of the integrated molded body 1 was performed according to the following criteria. A, B and C are acceptable, and D is not acceptable.

A: Case where all three comprehensive evaluations are determined as A
B: Case where C and D determinations among three comprehensive evaluations are not included and at least one is determined as B
C: Case where D determination among three comprehensive evaluations is not included and at least one is determined as C
D: Case where at least one among three comprehensive evaluations is determined as D

(Material composition example 1) Preparation of PAN-based carbon fiber bundle

Spinning and calcination were performed from a polymer containing polyacrylonitrile as a main component to obtain a continuous carbon fiber bundle having a total number of 12,000 filaments. A sizing agent was applied to this continuous carbon fiber bundle by a dipping method, and dried in heated air to obtain a PAN-based carbon fiber bundle. The properties of this PAN-based carbon fiber bundle were as follows.

Single fiber diameter: 7 $\mu$m
Mass per unit length: 0.83 g/m
Density: 1.8 g/cm$^3$
Tensile strength: 4.0 GPa
Tensile elastic modulus: 235 GPa

(Material composition example 2) Preparation of epoxy resin film

An epoxy resin (base resin: dicyandiamide/dichlorophenylmethylurea curing type epoxy resin) was applied on a release paper using a knife coater to obtain an epoxy resin film.

(Material composition example 3) Preparation of unidirectional prepreg

The PAN-based carbon fiber bundles prepared in Material composition example 1 were arranged in one direction in a form of a sheet, two epoxy resin films prepared in Material composition example 2 were stacked on both sides of the carbon fibers, and the resin was impregnated by heating and pressing, to prepare a unidirectional prepreg having a carbon fiber weight content of 70% and a thickness of 0.15 mm.

(Material composition example 4) Preparation of thermoplastic adhesive film (A)

Polyester resin ("Hytrel" (registered trademark) 4057 supplied by Toray-Dupont Co., Ltd.) was charged from the hopper of a twin-screw extruder, melt-kneaded by the extruder, and then extruded from a T-shaped die. Thereafter, it was cooled and solidified by taking it off with a chill roll at 60°C to prepare a polyester resin film having a thickness of 0.05 mm. This was used as a thermoplastic adhesive film (A).

(Material composition example 5) GF (glass fiber) reinforced polycarbonate resin

GF reinforced polycarbonate resin GSH2030KR (supplied by Mitsubishi Engineering Plastics Co., Ltd., polycarbonate resin matrix, fiber weight content: 30 wt%) was used.

(Material composition example 6) Polycarbonate resin

Polycarbonate resin ("Panlite" (registered trademark) L-1225L, supplied by Teijin Chemicals Ltd.) was used.

(Material composition example 7) Long fiber pellet-shaped long CF reinforced polycarbonate resin

The resin-impregnated reinforcing fiber bundle obtained by impregnating the carbon fibers prepared in Material composition example 1 with an epoxy resin was passed through the coating die for the wire coating method installed at the tip of a TEX-30$\alpha$ type twin screw extruder supplied by Japan Steel Works, Ltd. The polycarbonate resin of Material composition example 6 was supplied from the main hopper of the TEX-30$\alpha$ type twin-screw extruder, molten and kneaded, and then discharged into the die in a molten state to be continuously placed so as to coat the periphery of the resin-impregnated reinforcing fiber bundle. The obtained continuous molding material was cooled, and then cut with a cutter to obtain a long CF pellet-shaped long CF reinforced polycarbonate resin (fiber weight content: 20 wt %) having a length of 7 mm.

(Material composition example 8) Long CF (carbon fiber) reinforced polycarbonate resin (A)

The polycarbonate resin of Material composition example 6 and the long CF pellet-shaped long CF reinforced polycarbonate obtained in Material composition example 7 were dry blended to obtain a long CF reinforced polycarbonate resin having a fiber weight content of 15 wt%.

(Material composition example 9) Aluminum plate

Aluminum sheet AL5052, thickness: 1.25 mm

(Material composition example 10) Aluminum foil

Aluminum sheet AL5052, thickness: 0.3 mm

(Material composition example 11) Thermoplastic unidirectional prepreg

On the PAN-based carbon fiber bundles prepared in Material composition example 1 were arranged in one direction in a form of a sheet, the thermoplastic adhesive film (A) prepared in Material composition example 4 was overlaid and the resin was impregnated by heating and pressing, to obtain a thermoplastic unidirectional prepreg having a carbon fiber weight content of 60% and a thickness of 0.15 mm.

(Material composition example 12) Short CF reinforced polycarbonate resin

Short CF reinforced polycarbonate resin CFH2020 (supplied by Mitsubishi Engineering Plastics Co., Ltd., polycarbonate resin matrix, fiber weight content: 20 wt%) and polycarbonate resin H-3000 (supplied by Mitsubishi Engineering Plastics Co., Ltd., polycarbonate resin matrix, unreinforced) were dry blended to adjust the fiber weight content to 15 wt%.

(Material composition example 13) Preparation of thermoplastic adhesive film (B)

Pellets of polyamide resin (CM8000 supplied by Toray Industries, Inc., quaternary copolymerized polyamide 6/66/610/12, melting point: 130°C) were press-molded to obtain a thermoplastic adhesive film having a thickness of 0.05 mm. This was used as a thermoplastic adhesive film (B).

(Material composition example 14) GF reinforced nylon resin

GF reinforced nylon resin CM1011G-30 (supplied by Toray Industries, Inc., nylon 6 resin matrix, fiber weight content: 30 wt%, melting point: 225° C.) was used.

(Material composition example 15) Long CF reinforced nylon resin

Carbon long fiber pellet TLP-1146S (supplied by Toray Industries, Inc., nylon 6 resin matrix, fiber weight content: 20 wt%) and nylon 6 resin CM1007 (supplied by Toray Industries, nylon 6 resin matrix, unreinforced) were dry blended to obtain a long CF reinforced nylon resin having a fiber weight content of 15 wt%.

(Material composition example 16) Long CF reinforced polycarbonate resin (B)

The polycarbonate resin of Material composition example 6 and the long CF pellet-shaped long CF reinforced polycarbonate prepared in Material composition example 7 were dry blended to obtain a long CF reinforced polycarbonate resin having a fiber weight content of 8 wt%.

(Material composition example 17) Long CF reinforced polycarbonate resin (C)

By the same material and manufacturing method as those in Material composition example 7, a long fiber pellet-shaped long CF reinforced polycarbonate resin (fiber weight content: 40 wt%) was obtained. However, since the amount of the resin for coating the periphery of the resin-impregnated reinforced fiber bundle was small, many cracks in the pellet occurred.

(Material composition example 18) Long CF reinforced polycarbonate resin (D)

The polycarbonate resin of Material composition example 6 and the long fiber pellet-shaped long CF reinforced polycarbonate resin obtained in Material composition example 17 were dry blended to obtain a long CF reinforced polycarbonate resin having a fiber weight content of 25 wt%.

(Material composition example 19) Long CF reinforced polycarbonate resin/PBT resin

The long fiber pellet-shaped long CF reinforced polycarbonate obtained in Material composition example 7 and PBT resin 1401X31 (supplied by Toray Industries, Inc., PBT resin matrix, unreinforced) were dry blended to obtain a long. CF reinforced polycarbonate resin/PBT resin having a fiber weight content of 15 wt%.

(Material composition example 20) Long CF reinforced polycarbonate resin/ABS resin

The long fiber pellet-shaped long CF reinforced polycarbonate resin obtained in Material composition example 7 and an ABS resin QF (supplied by Denka Co., Ltd., PBT resin matrix, unreinforced) were dry blended to obtain a long CF reinforced polycarbonate resin/PBT resin having a fiber weight content of 15 wt%.

(Material composition example 21) Long CF reinforced polycarbonate resin/PET resin

The long fiber pellet-shaped long CF reinforced polycarbonate resin obtained in Material composition example 7 and a PET resin KS710B-8B (supplied by Kuraray Co., Ltd., PET resin matrix, unreinforced) were dry blended to obtain long CF reinforced polycarbonate resin/PET resin having a fiber weight content of 15 wt%.

(Material composition example 22) Glass fiber reinforced sheet

Glass fiber cloth prepreg R-5 (supplied by Nitto Boseki Co., Ltd., glass fiber, epoxy resin, glass fiber weight content: 60 % by mass, thickness: 0.15 mm).

(Material composition example 23) Preparation of polypropylene film

90% by mass of unmodified polypropylene ("Prime Polypro" (registered trademark) J105G, melting point: 160°C, supplied by Prime Polymer Co., Ltd.) and 10% by mass of acid-modified polypropylene ("Admer" (registered trademark) QE510, melting point: 160°C, supplied by Mitsui Chemicals, Inc.) were prepared and these were dry blended. This dry blended product was charged from the hopper of a twin-screw extruder, molten and kneaded by the extruder, and then, extruded from a T-shaped die. Thereafter, it was cooled and solidified by taking it off with a chill roll at 60°C to obtain a polypropylene film having a thickness of 0.65 mm.

Where, the properties of the resins of Material composition examples 8, 12, 15, 19, 20 and 21 are summarized in Table 1.

(Reference Example 1)

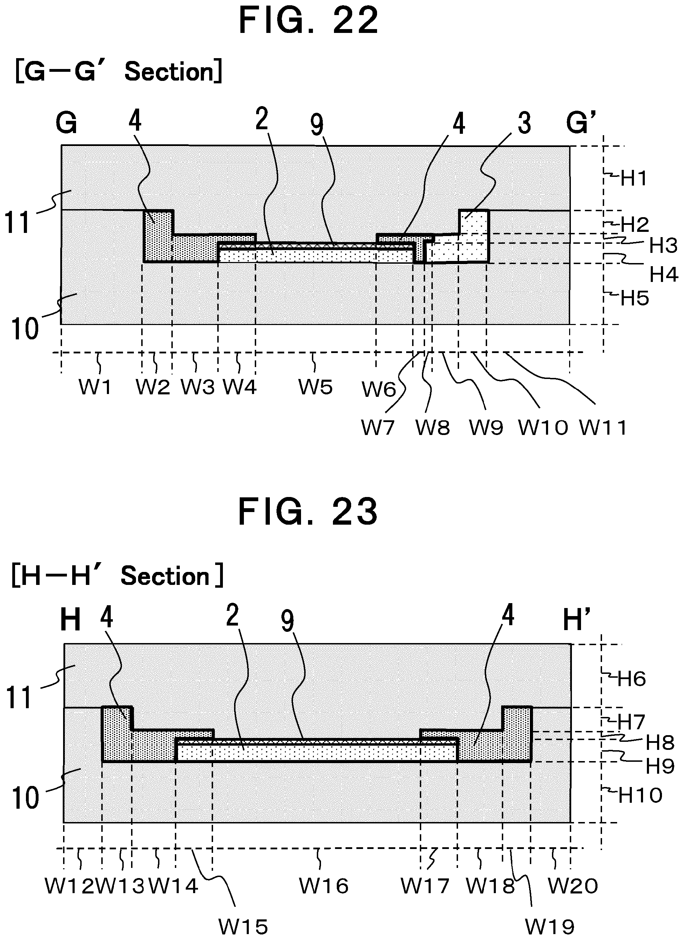

The sectional views of a pair of molds facing each other for obtaining the integrated molded bodies 1 shown in Figs. 18, 19, 20 and 21 are shown in Fig. 22 and Fig. 23. A concave is provided on the surface of the lower mold 10 facing the upper mold 11, and a convex shape is provided on the surface of the upper mold 11 facing the lower mold 10. The specific dimensions are as follows.
Dimensions in Figs. 22 and 23:

W1; 250 mm, W2; 5 mm, W3; 20 mm, W4; 5 mm, W5; 290 mm, W6; 5 mm, W7; 2 mm, W8; 2 mm, W9; 16 mm, W10; 5 mm, W11; 250 mm, W12; 200 mm, W13; 5 mm, W14; 20 mm, W15; 5 mm, W16; 190 mm, W17; 5 mm, W18; 20 mm, W19; 5 mm, W20; 200 mm
H1; 300 mm, H2; 5 mm, H3; 0.5 mm, H4; 1.25 mm, H5; 300 mm, H6; 300 mm, H7; 5 mm, H8; 0.5 mm, H9; 1.25 mm, H10; 300 mm

(Example 1)

The unidirectional prepreg obtained in Material composition example 3 and the thermoplastic adhesive film (A) obtained in Material composition example 4 were each adjusted to a size of 400 mm square, and then, they were laminated at an order of [unidirectional prepreg 0°/unidirectional prepreg 90°/unidirectional prepreg 0°/unidirectional prepreg 90°/unidirectional prepreg 90°/unidirectional prepreg 0°/unidirectional prepreg 90°/unidirectional prepreg 0°/thermoplastic adhesive film (A)]. Where, the longitudinal direction of the integrated molded body 1 was set to 0° direction. The laminate was sandwiched between release films and further sandwiched by tool plates. Here, as the thickness adjustment, a spacer having a thickness of 1.25 mm was inserted between the tool plates. After the tool plate was placed on the board surface having a board surface temperature of 150°C, the board surface was closed, and heated and pressed at 3 MPa. After 5 minutes passed from the pressing, the board surface was opened to obtain a flat plate-shaped CFRP (carbon fiber reinforced plastic) plate with a thermoplastic adhesive film (A) having a thickness of 1.25 mm. This was designated as the plate material (A) 2 to which the thermoplastic resin layer (D) 9 was adhered.

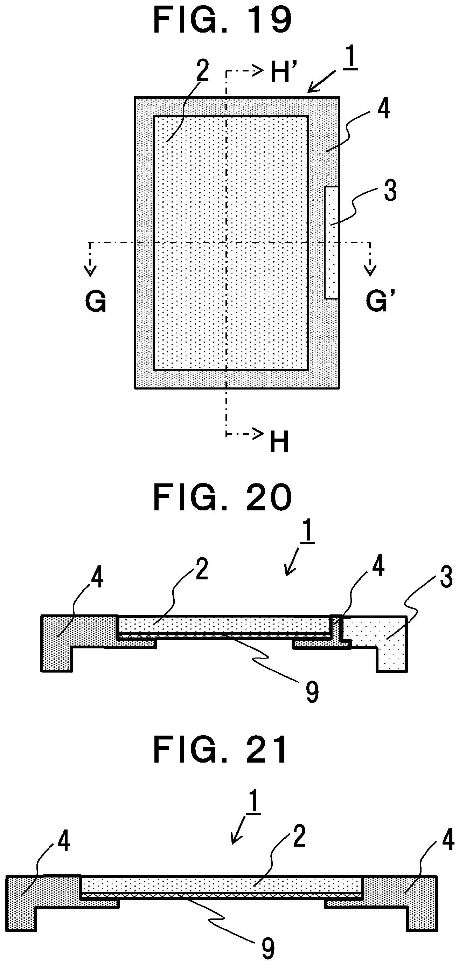

Next, injection molding was performed using the GF reinforced polycarbonate resin of Material composition example 5 to prepare a resin member (B) 3 having the shape shown in Figs. 18 and 20.

Next, as shown in Fig. 22, a CFRP plate (plate material (A) 2) with a thermoplastic adhesive film (A) processed into a size of 300 mm × 200 mm was placed and positioned inside the resin member (B) 3 at a state of being distanced from the resin member (B) 3, and at a state where the design surface side thereof was aligned on the lower mold 10 side. After setting the upper mold 11 and performing mold closing, the long CF reinforced polycarbonate resin (A) (resin member (C) 4) of Material composition example 8 was injection molded to manufacture an integrated molded body 1 composed of a top plate (plate material (A) 2) and standing walls (resin member (B) 3 and resin member (C) 4) on four sides, shown in Figs. 18, 20 and 21. Where, as the injection molding conditions, using a SE75DUZ-C250 type injection molding machine supplied by Sumitomo Heavy Industries, Ltd., an injection speed: 60 mm/s, injection time: 2 seconds, back pressure: 10 MPa, holding pressure: 80 MPa, holding pressure time: 10 seconds, cylinder temperature: 300°C, and mold temperature: 100°C were employed. Where, in Figs. 18, 20 and 21, the upper side of the drawings is designated as the design surface side. The properties of the integrated molded body 1 are summarized and shown in (Table 2).

(Example 2)

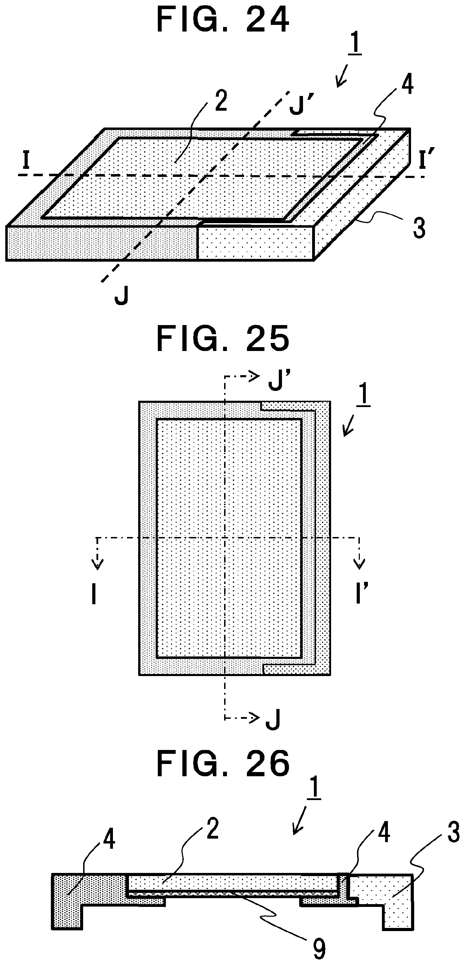

As shown in Figs. 24 and 25, an integrated molded body was manufactured in the same manner as in Example 1 other than the condition where the volume ratio of the resin member (C) 4 to the resin member (B) 3 was adjusted to 1. The properties of the integrated molded body 1 are summarized and shown in (Table 2).

(Example 3)

An integrated molded body was manufactured in the same manner as in Example 1 other than the condition where the volume ratio of the resin member (C) 4 to the resin member (B) 3 was adjusted to 3. The properties of the integrated molded body 1 are summarized and shown in (Table 2).

(Example 4)

An integrated molded body was manufactured in the same manner as in Example 1 other than the condition where the volume ratio of the resin member (C) 4 to the resin member (B) 3 was adjusted to 25. The properties of the integrated molded body 1 are summarized and shown in (Table 2).

(Example 5)

An integrated molded body was manufactured in the same manner as in Example 1 other than the condition where the volume ratio of the resin member (C) 4 to the resin member (B) 3 was adjusted to 40. The properties of the integrated molded body 1 are summarized and shown in (Table 2).

(Example 6)

An integrated molded body 1 was manufactured in the same manner as in Example 1 other than the condition where the aluminum plate (plate material (A) 2) of Material composition example 9 was used. Where, in order to secure a closed contact property with the long CF reinforced polycarbonate resin (A) (resin member (C) 4) of Material composition example 8, after applying an adhesive to the region corresponding to the second joining part of the aluminum plate (plate material (A) 2), they were integrated by injection molding. The properties of the integrated molded body 1 are summarized and shown in (Table 2).

(Example 7)

After the unidirectional prepreg obtained in Material composition example 3, the thermoplastic adhesive film (A) obtained in Material composition example 4, and the aluminum foil obtained in Material composition example 10 were each adjusted to a size of 400 mm square, they were laminated in the order of [aluminum foil/unidirectional prepreg 90°/unidirectional prepreg 0°/unidirectional prepreg 90°/unidirectional prepreg 90°/unidirectional prepreg 0°/unidirectional prepreg 90°/aluminum foil/thermoplastic adhesive film (A)]. By press molding the laminate in the same manner as in Example 1, a flat plate-shaped aluminum foil/CFRP plate with a thermoplastic adhesive film (A) having a thickness of 1.25 mm was obtained. This was designated as the plate material (A) 2 to which the thermoplastic resin layer (D) 9 was adhered. In the subsequent steps, the integrated molded body 1 was manufactured in the same manner as in Example 1. The properties of the integrated molded body 1 are summarized and shown in (Table 2).

(Example 8)

After the thermoplastic unidirectional prepreg obtained in Material composition example 11 and the thermoplastic adhesive film (A) obtained in Material composition example 4 were each adjusted to a size of 400 mm square, they were laminated in the order of [thermoplastic unidirectional prepreg 0°/thermoplastic unidirectional prepreg 90°/thermoplastic unidirectional prepreg 0°/unidirectional prepreg 90°/thermoplastic unidirectional prepreg 90°/thermoplastic unidirectional prepreg 0°/thermoplastic unidirectional prepreg 90°/thermoplastic unidirectional prepreg 0°/thermoplastic adhesive film (A)]. A flat plate-shaped thermoplastic CFRP plate with a thermoplastic adhesive film (A) having a thickness of 1.25 mm was obtained in the same manner as in Example 1 other than the condition where the heat pressing was performed at a board temperature of 180°C, a surface pressure of 3 MPa, and a pressing time of 6 minutes, and after the board surface temperature was lowered to 60°C by flowing a cooling water to the board surface, a molded plate was taken out. This was designated as the plate material (A) 2 to which the thermoplastic resin layer (D) 9 was adhered. In the subsequent steps, the integrated molded body 1 was manufactured in the same manner as in Example 1. The properties of the integrated molded body 1 are summarized and shown in (Table 2).

(Example 9)

An integrated molded body 1 was manufactured in the same manner as in Example 1 other than the condition where the back pressure of the injection molding condition at the time of integral molding was changed to 20 MPa. The properties of the integrated molded body 1 are summarized and shown in (Table 3).

(Example 10)

An integrated molded body 1 was manufactured in the same manner as in Example 1 other than the condition where the back pressure of the injection molding condition at the time of integral molding was changed to 2 MPa. The properties of the integrated molded body 1 are summarized and shown in (Table 3).

(Example 11)

The thermoplastic adhesive film (B) obtained in Material composition example 13, the GF reinforced nylon resin obtained in Material composition example 14, and the long CF reinforced nylon resin obtained in Material composition example 15 were used. Using the thermoplastic adhesive film (B) instead of the thermoplastic adhesive film (A), a plate material (A) 2 was manufactured in the same manner as in Example 1. Next, an integrated molded body 1 was manufactured in the same manner as in Example 1 other than the condition where the GF reinforced nylon resin was used for the resin member (B) 3 and the long CF reinforced nylon resin was used for the resin member (C) 4. Where, the molding was performed by changing the conditions for injection molding to a cylinder temperature of 260°C and a mold temperature of 60°C. The properties of the integrated molded body 1 are summarized and shown in (Table 3).

(Example 12)

An integrated molded body 1 was obtained in the same manner as in Example 1 other than the condition where the long CF reinforced polycarbonate resin (B) obtained in Material composition example 16 was used as the resin member (C) 4. The properties of the integrated molded body 1 are summarized and shown in (Table 3).

(Example 13)

An integrated molded body 1 was obtained in the same manner as in Example 1 other than the condition where the long CF reinforced polycarbonate resin (D) obtained in Material composition example 18 was used as the resin member (C) 4. The properties of the integrated molded body 1 are summarized and shown in (Table 3).

(Example 14)

An integrated molded body 1 was obtained in the same manner as in Example 1 other than the condition where the long CF reinforced polycarbonate resin (C) obtained in Material composition example 17 was used as the resin member (C) 4. The properties of the integrated molded body 1 are summarized and shown in (Table 3).

(Example 15)

An integrated molded body 1 was obtained in the same manner as in Example 1 other than the condition where the long CF reinforced polycarbonate resin/PBT resin obtained in Material composition example 19 was used as the resin member (C) 4. The properties of the integrated molded body 1 are summarized and shown in (Table 3).

(Example 16)

An integrated molded body 1 was obtained in the same manner as in Example 1 other than the condition where the long CF reinforced polycarbonate resin/ABS resin obtained in Material composition example 20 was used as the resin member (C) 4. The properties of the integrated molded body 1 are summarized and shown in (Table 3).

(Example 17)

An integrated molded body 1 was obtained in the same manner as in Example 1 other than the condition where the long CF reinforced polycarbonate resin/PET resin obtained in Material composition example 21 was used as the resin member (C) 4. The properties of the integrated molded body 1 are summarized and shown in (Table 3).

(Example 18)

An integrated molded body 1 was manufactured in the same manner as in Example 1 other than the condition where the resin member (B) 3 was manufactured using the glass fiber reinforced sheet obtained in Material composition example 22. Where, the resin member (B) 3 was manufactured by stacking 40 glass fiber reinforced sheets each cut in a size of 200 mm square in the thickness direction to obtain a 200 mm square × 6.0 mm thick GFRP (glass fiber reinforced plastic) plate. It was adjusted to a resin member (B) 3 having the shape shown in Figs. 18 and 20 by cutting this GFRP plate with an NC processing machine. In the subsequent steps, the integrated molded body 1 was manufactured in the same manner as in Example 1. Where, in order to secure a closed contact property with the long CF reinforced polycarbonate resin (A) (resin member (C) 4) of Material composition example 8, after applying an adhesive to the region corresponding to the first joining part of the GFRP plate, they were integrated by injection molding. The properties of the integrated molded body 1 are summarized and shown in (Table 3).

(Comparative Example 1)

An integrated molded body 1 was manufactured in the same manner as in Example 1 other than the condition where the CF reinforced polycarbonate resin obtained in Material composition example 5 was used as the resin member (C) 4. The properties of the integrated molded body 1 are summarized and shown in (Table 4).

(Comparative Example 2)

An integrated molded body 1 was manufactured in the same manner as in Example 1 other than the condition where the short CF reinforced polycarbonate resin obtained in Material composition example 12 was used as the resin member (C) 4. The properties of the integrated molded body 1 are summarized and shown in (Table 4).

(Comparative Example 3)

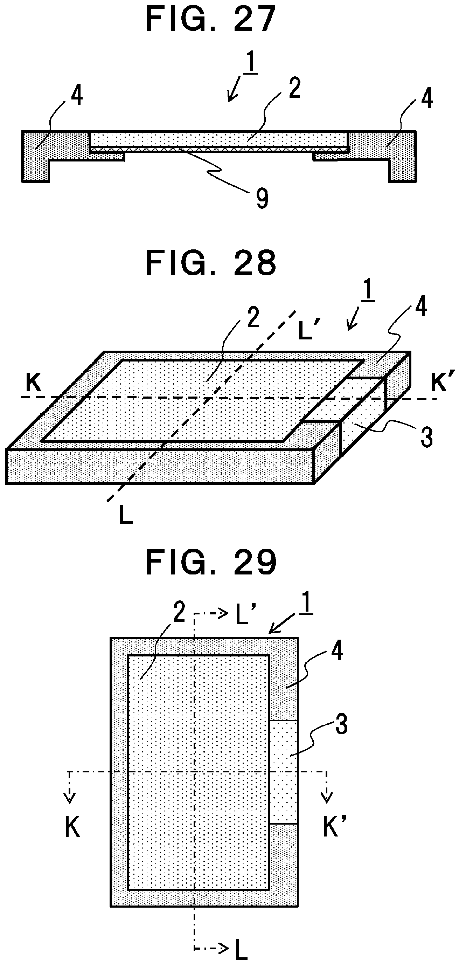

An integrated molded body 1 having the shape shown in Figs. 26, 27, 28 and 29 was manufactured. An integrated molded body 1 was manufactured in the same manner as in Example 1 other than the condition where the CFRP plate (plate material (A) 2) with a thermoplastic adhesive film (A) processed into a size of 300 mm × 200 mm was positioned and placed inside the resin member (B) 3, at a state being in close contact with the resin member (B) 3 and at a state where the design surface side thereof was set at the side of the lower mold 10. The properties of the integrated molded body 1 are summarized and shown in (Table 4).

[Table 1]

| | | | | Material composition example 8 | Material composition example 12 | Material composition example 15 | Material composition example 19 | Material composition example 20 | Material composition example 21 |
|---|---|---|---|---|---|---|---|---|---|
| Name of material | | | - | Long CF reinforced polycarbonate resin (A) | Short CF reinforced polycarbonate resin | Long CF reinforced nylon resin | Long CF reinforced polycarbonate resin /PBT resin | Long CF reinforced polycarbonate resin /ABS resin | Long CF reinforced polycarbonate resin /PET resin |
| Kind of fiber | | | - | Long CF | Short CF | Long CF | Long CF | Long CF | Long CF |
| Kind of resin | | | - | Polycarbonate resin | Polycarbonate resin | nylon 6 resin | Polycarbonate resin /PBT resin | Polycarbonate resin /ABS resin | Polycarbonate resin /PET resin |
| Fiber weight content | | | wt % | 15 | 15 | 15 | 15 | 15 | 15 |
| Molding shrinkage | Immediately after molding | Flow direction | % | 0.1 | 0.3 | 0.1 | 0.1 | 0.1 | 0.1 |
| | | Direction perpendicular to flow direction | % | 0.2 | 0.3 | 0.2 | 0.1 | 0.2 | 0.1 |
| | After moisture absorption | Flow direction | % | 0.1 | 0.3 | -0.2 | 0.1 | 0.1 | 0.1 |
| | | Direction perpendicular to flow direction | % | 0.2 | 0.4 | -0.2 | 0.1 | 0.2 | 0.1 |
| Weight average fiber length ※ Measured by cutting out sample for shrinkage | | | mm | 0.3 | 0.1 | 0.5 | 0.5 | 0.4 | 0.4 |
| Flow length | | | mm | 100 | 100 | 130 | 130 | 110 | 120 |

[Table 2]

EP 3 804 942 A1

| | | | | Example 1 | Example 2 | Example 3 | Example 4 |
|---|---|---|---|---|---|---|---|
| Constituent member | Plate material (A) | | — | CFRP plate with thermoplastic adhesive film (A) | CFRP plate with thermoplastic adhesive film (A) | CFRP plate with thermoplastic adhesive film (A) | CFRP plate with thermoplastic adhesive film (A) |
| | Resin member (B) | | — | GF reinforced polycarbonate resin | GF reinforced polycarbonate resin | GF reinforced polycarbonate resin | GF reinforced polycarbonate resin |
| | Resin member (C) | | — | Long CF reinforced polycarbonate resin (A) | Long CF reinforced polycarbonate resin (A) | Long CF reinforced polycarbonate resin (A) | Long CF reinforced polycarbonate resin (A) |
| Integrated molded body | Shape of integrated molded body | | — | Fig.18 | Fig.24 | Fig.18 | Fig.18 |
| | Method of integration | | — | Injection molding | Injection molding | Injection molding | Injection molding |
| | Shape of joint part | | — | Fig.20, Fig.21 | Fig.20, Fig.21 | Fig.20, Fig.21 | Fig.20, Fig.21 |
| | Positional relationship between plate material (A) and resin member (B) | | — | Distanced | Distanced | Distanced | Distanced |
| | Volume ratio of resin member (C)/resin member (B) | | — | 10 | 1 | 3 | 25 |
| | Properties of each member of integrated molded body | Resin member (B) — Radio wave transmission | — | Present | Present | Present | Present |
| | | Resin member (B) — Weight average fiber length | mm | 0.3 | 0.3 | 0.3 | 0.2 |
| | | Resin member (C) — Weight average fiber length | mm | 0.5 | 0.6 | 0.7 | 0.5 |
| | | Resin member (C) — Density | g/cm$^3$ | 1.3 | 1.3 | 1.3 | 1.3 |
| | | Resin member (C) — Fiber weight content | wt % | 15 | 15 | 15 | 15 |
| | Warpage amount | Immediately after molding — Long side | mm | 0.3 | 1.1 | 0.5 | 0.2 |
| | | Immediately after molding — Short side | mm | 0.2 | 0.7 | 0.3 | 0.3 |
| | | Immediately after molding — Diagonal | mm | 0.2 | 0.8 | 0.4 | 0.2 |
| | | Immediately after molding — Total of respective warpage amounts | mm | 0.7 | 2.6 | 1.2 | 0.7 |
| | | Immediately after molding — Evaluation | — | A | C | B | A |
| | | After moisture absorption — Long side | mm | 0.3 | 1.2 | 0.6 | 0.2 |
| | | After moisture absorption — Evaluation | — | A | A | A | A |
| | | Comprehensive evaluation | — | A | C | B | A |
| | Linear expansion coefficient of resin used for resin member (C) | Flow direction — Linear expansion coefficient | ×10$^{-5}$/K | 2.9 | 2.9 | 2.9 | 2.9 |
| | | Flow direction — Evaluation | — | B | B | B | B |
| | | Direction perpendicular to flow direction — Linear expansion coefficient | ×10$^{-5}$/K | 1.5 | 1.5 | 1.5 | 1.5 |
| | | Direction perpendicular to flow direction — Evaluation | — | B | B | B | B |
| | | Comprehensive evaluation | — | B | B | B | B |
| | Smoothness of joint boundary part | Measurement position | — | Joint part at G' side in G-G' section of Fig. 18 | Joint part at I' side in I-I' section of Fig. 24 | Joint part at G' side in G-G' section of Fig. 18 | Joint part at G' side in G-G' section of Fig. 18 |
| | | Between plate material (A) and resin member (C) | — | A | A | A | A |
| | | Between plate material (A) and resin member (B) | — | — | — | — | — |
| | | Between resin member (B) and resin member (C) | — | A | A | A | A |
| | | Comprehensive evaluation | — | A | A | A | A |
| | Comprehensive evaluation | | — | B | C | B | B |

[Table 2]-Continued

EP 3 804 942 A1

| | | | | | Example 5 | Example 6 | Example 7 | Example 8 |
|---|---|---|---|---|---|---|---|---|
| Constituent member | | | Plate material (A) | — | CFRP plate with thermoplastic adhesive film (A) | Aluminum plate | Aluminum foil/CFRP plate with thermoplastic adhesive film (A) | Thermoplastic CFRP plate with thermoplastic adhesive film (A) |
| | | | Resin member (B) | — | GF reinforced polycarbonate resin | GF reinforced polycarbonate resin | GF reinforced polycarbonate resin | GF reinforced polycarbonate resin |
| | | | Resin member (C) | — | Long CF reinforced polycarbonate resin (A) | Long CF reinforced polycarbonate resin (A) | Long CF reinforced polycarbonate resin (A) | Long CF reinforced polycarbonate resin (A) |
| | | | Shape of integrated molded body | — | Fig.18 | Fig.18 | Fig.18 | Fig.18 |
| Integrated molded body | | | Method of integration | — | Injection molding | Injection molding | Injection molding | Injection molding |
| | | | Shape of joint part | — | Fig.20, Fig.21 | Fig.20, Fig.21 ※Thermoplastic resin layer (D) not present | Fig.20, Fig.21 | Fig.20, Fig.21 |
| | | | Positional relationship between plate material (A) and resin member (B) | — | Distanced | Distanced | Distanced | Distanced |
| | | | Volume ratio of resin member (C)/resin member (B) | — | 40 | 10 | 10 | 10 |
| | Properties of each member of integrated molded body | Resin member (B) | Radio wave transmission | — | Present | Present | Present | Present |
| | | | Weight average fiber length | mm | 0.3 | 0.3 | 0.3 | 0.2 |
| | | Resin member (C) | Weight average fiber length | mm | 0.5 | 0.6 | 0.6 | 0.5 |
| | | | Density | g/cm$^3$ | 1.3 | 1.3 | 1.3 | 1.3 |
| | | | Fiber weight content | wt % | 15 | 15 | 15 | 15 |
| | Warpage amount | Immediately after molding | Long side | mm | 0.2 | 0.9 | 0.4 | 0.4 |
| | | | Short side | mm | 0.2 | 0.8 | 0.3 | 0.4 |
| | | | Diagonal | mm | 0.2 | 0.8 | 0.4 | 0.4 |
| | | | Total of respective warpage amounts | mm | 0.6 | 2.5 | 1.1 | 1.2 |
| | | | Evaluation | — | A | C | B | B |
| | | After moisture absorption | Long side | mm | 0.3 | 1.0 | 0.4 | 0.4 |
| | | | Evaluation | — | A | A | A | A |
| | | | Comprehensive evaluation | — | A | C | B | B |
| | Linear expansion coefficient of resin used for resin member (C) | Flow direction | Linear expansion coefficient | ×10$^{-5}$/K | 2.9 | 2.9 | 2.9 | 2.9 |
| | | | Evaluation | — | B | B | B | B |
| | | Direction perpendicular to flow direction | Linear expansion coefficient | ×10$^{-5}$/K | 1.5 | 1.5 | 1.5 | 1.5 |
| | | | Evaluation | — | B | B | B | B |
| | | | Comprehensive evaluation | — | B | B | B | B |
| | Smoothness of joint boundary part | | Measurement position | — | Joint part at G' side in G-G' section of Fig. 18 | Joint part at G' side in G-G' section of Fig. 18 | Joint part at G' side in G-G' section of Fig. 18 | Joint part at G' side in G-G' section of Fig. 18 |
| | | | Between plate material (A) and resin member (C) | — | A | A | A | A |
| | | | Between plate material (A) and resin member (B) | — | — | — | — | — |
| | | | Between resin member (B) and resin member (C) | — | A | A | A | A |
| | | | Comprehensive evaluation | — | A | A | A | A |
| | Comprehensive evaluation | | | — | B | C | B | B |

**[Table 3]**

| | | | | Example 9 | Example 10 | Example 11 | Example 12 | Example 13 |
|---|---|---|---|---|---|---|---|---|
| Constituent member | | Plate material (A) | — | CFRP plate with thermoplastic adhesive film (A) | CFRP plate with thermoplastic adhesive film (A) | CFRP plate with thermoplastic adhesive film (A) | CFRP plate with thermoplastic adhesive film (A) | CFRP plate with thermoplastic adhesive film (A) |
| | | Resin member (B) | — | GF reinforced polycarbonate resin | GF reinforced polycarbonate resin | GF reinforced nylon resin | GF reinforced polycarbonate resin | GF reinforced polycarbonate resin |
| | | Resin member (C) | — | Long CF reinforced polycarbonate resin (A) | Long CF reinforced polycarbonate resin (A) | Long CF reinforced nylon resin | Long CF reinforced polycarbonate resin (B) | Long CF reinforced polycarbonate resin (D) |
| | | Shape of integrated molded body | — | Fig.18 | Fig.18 | Fig.18 | Fig.18 | Fig.18 |
| Integrated molded body | | Method of integration | — | Injection molding | Injection molding | Injection molding | Injection molding | Injection molding |
| | | Shape of joint part | — | Fig.20, Fig.21 | Fig.20, Fig.21 | Fig.20, Fig.21 | Fig.20, Fig.21 | Fig.20, Fig.21 |
| | | Positional relationship between plate material (A) and resin member (B) | — | Distanced | Distanced | Distanced | Distanced | Distanced |
| | | Volume ratio of resin member (C)/resin member (B) | — | 10 | 10 | 10 | 10 | 10 |
| | Properties of each member of integrated molded body | Resin member (B) — Radio wave transmission | — | Present | Present | Present | Present | Present |
| | | Resin member (B) — Weight average fiber length | mm | 0.3 | 0.3 | 0.3 | 0.3 | 0.3 |
| | | Resin member (C) — Weight average fiber length | mm | 0.4 | 1.6 | 0.8 | 0.7 | 0.5 |
| | | Resin member (C) — Density | g/cm$^3$ | 1.3 | 1.3 | 1.2 | 1.25 | 1.35 |
| | | Resin member (C) — Fiber weight content | wt % | 15 | 15 | 15 | 8 | 25 |
| | Warpage amount | Immediately after molding — Long side | mm | 0.8 | 0.2 | 0.5 | 0.6 | 0.2 |
| | | Immediately after molding — Short side | mm | 0.6 | 0.2 | 0.4 | 0.4 | 0.1 |
| | | Immediately after molding — Diagonal | mm | 0.5 | 0.3 | 0.4 | 0.6 | 0.2 |
| | | Immediately after molding — Total of respective warpage amounts | mm | 1.9 | 0.7 | 1.3 | 1.6 | 0.5 |
| | | Immediately after molding — Evaluation | - | B | A | B | B | A |
| | | After moisture absorption — Long side | mm | 0.9 | 0.3 | 1.0 | 0.7 | 0.2 |
| | | After moisture absorption — Evaluation | - | A | A | C | A | A |
| | | Comprehensive evaluation | — | B | A | C | B | A |
| | Linear expansion coefficient of resin used for resin member (C) | Flow direction — Linear expansion coefficient | ×10$^{-5}$/K | 3.5 | 2.5 | 3.0 | 3.6 | 2.6 |
| | | Flow direction — Evaluation | — | C | B | C | C | B |
| | | Direction perpendicular to flow direction — Linear expansion coefficient | ×10$^{-5}$/K | 1.8 | 1.1 | 1.6 | 1.9 | 1.2 |
| | | Direction perpendicular to flow direction — Evaluation | — | C | B | C | C | B |
| | | Comprehensive evaluation | — | C | B | C | C | B |
| | Smoothness of joint boundary part | Measurement position | — | Joint part at G' side in G-G' section of Fig. 18 | Joint part at G' side in G-G' section of Fig. 18 | Joint part at G' side in G-G' section of Fig. 18 | Joint part at G' side in G-G' section of Fig. 18 | Joint part at G' side in G-G' section of Fig. 18 |
| | | Between plate material (A) and resin member (C) | — | A | B | A | A | A |
| | | Between plate material (A) and resin member (B) | — | — | — | — | — | — |
| | | Between resin member (B) and resin member (C) | — | A | B | A | A | A |
| | | Comprehensive evaluation | — | A | B | A | A | A |
| | | Comprehensive evaluation | — | C | B | C | C | B |

[Table 3]-Continued

|  |  |  |  | Example 14 | Example 15 | Example 16 | Example 17 | Example 18 |
|---|---|---|---|---|---|---|---|---|
| Constituent member | Plate material (A) |  | — | CFRP plate with thermoplastic adhesive film (A) | CFRP plate with thermoplastic adhesive film (A) | CFRP plate with thermoplastic adhesive film (A) | CFRP plate with thermoplastic adhesive film (A) | CFRP plate with thermoplastic adhesive film (A) |
|  | Resin member (B) |  | — | GF reinforced polycarbonate resin | GF reinforced polycarbonate resin | GF reinforced polycarbonate resin | GF reinforced polycarbonate resin | CFRP plate |
|  | Resin member (C) |  | — | Long CF reinforced polycarbonate resin (C) | Long CF reinforced polycarbonate resin /PBT resin | Long CF reinforced polycarbonate resin /ABS resin | Long CF reinforced polycarbonate resin /PET resin | Long CF reinforced polycarbonate resin (A) |
|  | Shape of integrated molded body |  | — | Fig.18 | Fig.18 | Fig.18 | Fig.18 | Fig.18 |
| Integrated molded body | Method of integration |  | — | Injection molding | Injection molding | Injection molding | Injection molding | Injection molding |
|  | Shape of joint part |  | — | Fig.20, Fig.21 | Fig.20, Fig.21 | Fig.20, Fig.21 | Fig.20, Fig.21 | Fig.20, Fig.21 |
|  | Positional relationship between plate material (A) and resin member (B) |  | — | Distanced | Distanced | Distanced | Distanced | Distanced |
|  | Volume ratio of resin member (C)/resin member (B) |  | — | 10 | 10 | 10 | 10 | 10 |
|  | Properties of each member of integrated molded body | Resin member (B) — Radio wave transmission | — | Present | Present | Present | Present | Present |
|  |  | Resin member (B) — Weight average fiber length | mm | 0.2 | 0.3 | 0.3 | 0.3 | 0.3 |
|  |  | Resin member (C) — Weight average fiber length | mm | 0.4 | 0.9 | 0.8 | 0.9 | 0.5 |
|  |  | Resin member (C) — Density | g/cm$^3$ | 1.45 | 1.3 | 1.3 | 1.3 | 1.3 |
|  |  | Resin member (C) — Fiber weight content | wt % | 40 | 15 | 15 | 15 | 15 |
|  | Warpage amount | Immediately after molding — Long side | mm | 0.2 | 0.2 | 0.3 | 0.2 | 0.2 |
|  |  | Immediately after molding — Short side | mm | 0.1 | 0.1 | 0.1 | 0.1 | 0.2 |
|  |  | Immediately after molding — Diagonal | mm | 0.1 | 0.2 | 0.2 | 0.3 | 0.2 |
|  |  | Immediately after molding — Total of respective warpage amounts | mm | 0.4 | 0.5 | 0.6 | 0.6 | 0.6 |
|  |  | Immediately after molding — Evaluation | - | A | A | A | A | A |
|  |  | After moisture absorption — Long side | mm | 0.2 | 0.3 | 0.3 | 0.3 | 0.2 |
|  |  | After moisture absorption — Evaluation | - | A | A | A | A | A |
|  |  | Comprehensive evaluation | — | A | A | A | A | A |
|  | Linear expansion coefficient of resin used for resin member (C) | Flow direction — Linear expansion coefficient | ×10⁻⁵/K | 2.3 | 1.9 | 2.2 | 2.3 | 2.9 |
|  |  | Flow direction — Evaluation | — | B | A | B | B | B |
|  |  | Direction perpendicular to flow direction — Linear expansion coefficient | ×10⁻⁵/K | 1.1 | 0.9 | 1.3 | 1.2 | 1.5 |
|  |  | Direction perpendicular to flow direction — Evaluation | — | B | A | B | B | B |
|  |  | Comprehensive evaluation | — | B | A | B | B | B |
|  | Smoothness of joint boundary part | Measurement position | — | Joint part at G' side in G-G' section of Fig. 18 | Joint part at G' side in G-G' section of Fig. 18 | Joint part at G' side in G-G' section of Fig. 18 | Joint part at G' side in G-G' section of Fig. 18 | Joint part at G' side in G-G' section of Fig. 18 |
|  |  | Between plate material (A) and resin member (C) | — | B | A | A | A | A |
|  |  | Between plate material (A) and resin member (B) | — | — | — | — | — | — |
|  |  | Between resin member (B) and resin member (C) | — | B | A | A | A | A |
|  |  | Comprehensive evaluation | — | B | A | A | A | A |
|  | Comprehensive evaluation |  | — | B | A | B | B | B |

26

[Table 4]

| | | | Comparative Example 1 | Comparative Example 2 | Comparative Example 3 |
|---|---|---|---|---|---|
| Constituent member | Plate material (A) | - | CFRP plate with thermoplastic adhesive film (A) | CFRP plate with thermoplastic adhesive film (A) | CFRP plate with thermoplastic adhesive film (A) |
| | Resin member (B) | - | GF reinforced polycarbonate resin | GF reinforced polycarbonate resin | GF reinforced polycarbonate resin |
| | Resin member (C) | - | GF reinforced polycarbonate resin | Short CF reinforced polycarbonate resin | Long CF reinforced polycarbonate resin (A) |
| | Shape of integrated molded body | - | Fig.18 | Fig.18 | Fig.28 |
| | Method of integration | - | Injection molding | Injection molding | Injection molding |
| | Shape of joint part | - | Fig.20, Fig.21 | Fig.20, Fig.21 | Fig.30, Fig.31 |
| | Positional relationship between plate material (A) and resin member (B) | - | Distanced | Distanced | Closed contact |
| | Volume ratio of resin member (C)/resin member (B) | - | 10 | 10 | 10 |
| | Properties of each member of integrated molded body — Resin member (B) — Radio wave transmission | - | Present | Present | Present |
| | Resin member (B) — Weight average fiber length | mm | 0.3 | 0.3 | 0.3 |
| | Resin member (C) — Weight average fiber length | mm | 0.2 | 0.2 | 0.6 |
| | Resin member (C) — Density | g/cm$^3$ | 1.5 | 1.3 | 1.3 |
| | Resin member (C) — Fiber weight content | wt % | 40 | 15 | 15 |

EP 3 804 942 A1

| | | | | | Comparative Example 1 | Comparative Example 2 | Comparative Example 3 |
|---|---|---|---|---|---|---|---|
| Integrated molded body | Warpage amount | Immediately after molding | Long side | mm | 1.4 | 1.0 | 0.3 |
| | | | Short side | mm | 0.7 | 0.5 | 0.1 |
| | | | Diagonal | mm | 1.0 | 0.7 | 0.2 |
| | | | Total of respective warpage amount | mm | 3.1 | 2.2 | 0.6 |
| | | | Evaluation | - | D | C | A |
| | | After moisture absorption | Long side | mm | 1.5 | 1.1 | 0.4 |
| | | | Evaluation | - | A | A | A |
| | | Comprehensive evaluation | | - | D | C | A |
| | Linear expansion coefficient of resin used for resin member (C) | Flow direction | Linear expansion coefficient | $\times 10^{-5}$/K | 1.0 | 1.8 | 2.9 |
| | | | Evaluation | - | A | A | B |
| | | Direction perpendicular to flow direction | Linear expansion coefficient | $\times 10^{-5}$/K | 4.5 | 2.1 | 1.5 |
| | | | Evaluation | - | D | C | B |
| | | Comprehensive evaluation | | - | D | C | B |

| | | | | Comparative Example 1 | Comparative Example 2 | Comparative Example 3 |
|---|---|---|---|---|---|---|
| Smoothness of joint boundary part | | Measurement position | - | Joint part at G' side in G-G' section of Fig. 18 | Joint part at G' side in G-G' section of Fig. 18 | Joint part at K' side in K-K' section of Fig.28 |
| | | Between plate material (A) and resin member (C) | - | A | A | - |
| | | Between plate material (A) and resin member (B) | - | - | - | D |
| | | Between resin member (B) and resin member (C) | - | A | A | - |
| | | Comprehensive evaluation | - | A | A | D |
| Comprehensive evaluation | | | - | D | C | D |

EP 3 804 942 A1

Industrial Applicability

The integrated molded body according to the present invention can be effectively used for automobile interior/exterior, electric/electronic device housings, bicycles, structural materials for sporting goods, aircraft interior materials, transportation boxes, and the like.

Explanation of symbols

1: integrated molded body
2: plate material (A)
3: resin member (B)
4: joining resin member (C)
5: first joining part
6: second joining part
7: region where plate material (A), resin member (B) and resin member (C) are exposed
8: standing wall shape portion
9: thermoplastic resin layer (D)
10: lower mold
11: upper mold

**Claims**

1. An integrated molded body in which a resin member (C) comprising discontinuous carbon fibers and a thermoplastic resin is interposed between a plate material (A) one side surface of which is a design surface, and a resin member (B), **characterized in that** the integrated molded body has a first joining part at which the resin member (B) is joined to the resin member (C) and a second joining part at which at least a partial region of an outer peripheral edge part of the plate material (A) is joined to the resin member (C).

2. The integrated molded body according to claim 1, wherein the discontinuous carbon fibers contained in the resin member (C) have a weight average fiber length of 0.3 to 3 mm.

3. The integrated molded body according to claim 1 or 2, wherein the resin member (C) is a resin member molded by injection molding, and among linear expansion coefficients of the resin member (C), a linear expansion coefficient in a resin flow direction during injection molding is $1.0 \times 10^{-7}$ to $4.0 \times 10^{-5}$/K, and a linear expansion coefficient in a direction perpendicular to the resin flow direction is $1.0 \times 10^{-7}$ to $2.0 \times 10^{-5}$/K.

4. The integrated molded body according to any one of claims 1 to 3, wherein a main component of the thermoplastic resin contained in the resin member (C) is a polycarbonate resin.

5. The integrated molded body according to claim 4, wherein the resin member (C) contains at least one resin selected from a polybutylene terephthalate (PBT) resin, an acrylonitrile-butadiene-styrene (ABS) resin and a polyethylene terephthalate (PET) resin together with the polycarbonate resin.

6. The integrated molded body according to any one of claims 1 to 5, wherein the resin member (C) has a density of 1.0 to 1.4 g/cm$^3$.

7. The integrated molded body according to any one of claims 1 to 6, wherein the resin member (C) has a fiber weight content of 5 to 30% by weight.

8. The integrated molded body according to any one of claims 1 to 7, wherein a volume of the resin member (C) is 2 to 30 times a volume of the resin member (B).

9. The integrated molded body according to any one of claims 1 to 8, wherein the second joining part is formed over the entire circumference of the outer peripheral edge part of the plate material (A).

10. The integrated molded body according to any one of claims 1 to 9, wherein the plate material (A) and the resin member (B) are distanced from each other.

11. The integrated molded body according to any one of claims 1 to 10, wherein at least a part of a surface on the design surface side of the integrated molded body has a region where the plate material (A), the resin member (B) and the resin member (C) are exposed.

12. The integrated molded body according to any one of claims 1 to 11, wherein at least a part of the resin member (C) has a standing wall shape portion.

13. The integrated molded body according to any one of claims 1 to 12, wherein the plate material (A) and the resin member (C) are joined via a thermoplastic resin layer (D).

14. The integrated molded body according to any one of claims 1 to 13, wherein the resin member (B) comprises discontinuous glass fibers having a weight average fiber length of 0.1 to 0.7 mm and a thermoplastic resin.

15. The integrated molded body according to any one of claims 1 to 14, wherein the resin member (B) is a radio wave transmitting member.

16. The integrated molded body according to any one of claims 1 to 15, wherein the plate material (A) has a structure including any one of a metal member and a carbon fiber reinforced resin member.

17. The integrated molded body according to claim 16, wherein the plate material (A) is a carbon fiber reinforced resin member impregnated with a thermosetting resin.

18. An integrated molded body comprising a plate material (A) whose one side surface is a design surface and a resin member (C) joined to at least a part of an outer edge of the plate material (A), **characterized in that** the resin member (C) comprises discontinuous carbon fibers and a thermoplastic resin, a weight average fiber length of the discontinuous carbon fibers is 0.3 to 3 mm, and a main component of the thermoplastic resin is a polycarbonate resin.

19. A method for manufacturing an integrated molded body comprising at least the following step [1] and step [2]:

[1] a step of placing a plate material (A), whose one side surface is a design surface, inside a resin member (B) in a mold at a condition where at least a part of the plate material (A) is distanced from the resin member (B), and
[2] a step of integrally joining the plate material (A) and the resin member (B) at least at an outer peripheral edge part of the plate material (A) by injection molding a resin member (C) into a space between the plate material (A) and the resin member (B).

20. The method for manufacturing an integrated molded body according to claim 19, wherein the plate material (A) and the resin member (B) are integrated at a condition being distanced from each other, by placing the plate material (A) inside the resin member (B) in the mold at a condition being distanced from the resin member (B) and injection molding the resin member (C) into the space.

21. The method for manufacturing an integrated molded body according to claim 19 or 20, wherein at least a part of a surface on the design surface side of the integrated molded body becomes a region where the plate material (A), the resin member (B) and the resin member (C) are exposed, by injection molding the resin member (C) into the space from a side opposite to the design surface.

# FIG. 1

# FIG. 2

# FIG. 3

# FIG. 4

# FIG. 5

# FIG. 6

# FIG. 7

# FIG. 8

# FIG. 9

# FIG. 10

# FIG. 11

# FIG. 12

# FIG. 13

# FIG. 14

# FIG. 15

# FIG. 16

# FIG. 17

[1]

3    10    2    3

[2]

4  3  4    10    2    4  3  4

# FIG. 18

# FIG. 19

# FIG. 20

# FIG. 21

# FIG. 22

[G−G′ Section]

G    4     2    9      4    3   G′

H1
H2
H3
H4
H5

11
10

W1   W2   W3   W4    W5    W6

W7   W8   W9   W10   W11

# FIG. 23

[H−H′ Section]

H   4     2    9        4   H′

H6
H7
H8
H9
H10

11
10

W12 W13 W14     W16    W17   W18   W20

W15          W19

# FIG. 24

# FIG. 25

# FIG. 26

# FIG. 27

# FIG. 28

# FIG. 29

# FIG. 30

# FIG. 31

## INTERNATIONAL SEARCH REPORT

| International application No. |
|---|
| PCT/JP2019/021102 |

A.   CLASSIFICATION OF SUBJECT MATTER
Int.Cl. B29C45/14(2006.01)i, B29C65/70(2006.01)i, B32B5/28(2006.01)i

According to International Patent Classification (IPC) or to both national classification and IPC

B.   FIELDS SEARCHED

Minimum documentation searched (classification system followed by classification symbols)
Int.Cl. B29C45/00-45/84, B29C65/00-65/82, B32B1/00-43/00

Documentation searched other than minimum documentation to the extent that such documents are included in the fields searched
Published examined utility model applications of Japan        1922-1996
Published unexamined utility model applications of Japan      1971-2019
Registered utility model specifications of Japan              1996-2019
Published registered utility model applications of Japan      1994-2019

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X<br>A | JP 2006-130862 A (TORAY INDUSTRIES, INC.) 25 May 2006, paragraphs [0025]-[0027], [0048], [0067], example 1, fig. 1, 2 (Family: none) | 18<br>1-17, 19-21 |
| A | JP 62-5775 B2 (YOSHINO KOGYOSHO CO., LTD.) 06 February 1987, claims, drawings & JP 53-138463 A | 1-21 |
| P, X<br>P, A | WO 2018/110293 A1 (TORAY INDUSTRIES, INC.) 21 June 2018, claims, drawings & TW 201827203 A | 19-21<br>1-18 |

☐   Further documents are listed in the continuation of Box C.            ☐   See patent family annex.

| | |
|---|---|
| *        Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| 02 August 2019 (02.08.2019) | 13 August 2019 (13.08.2019) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003236877 A
- JP HEI11179758 A
- JP 2000272014 A
- JP 2008034823 A
- JP 2016049649 A
- JP 2002129027 A